(19) **Europäisches Patentamt / European Patent Office / Office européen des brevets**

(11) **EP 4 685 584 A1**

(12) **EUROPEAN PATENT APPLICATION**
published in accordance with Art. 153(4) EPC

(43) Date of publication:
**28.01.2026 Bulletin 2026/05**

(21) Application number: **24774173.9**

(22) Date of filing: **20.03.2024**

(51) International Patent Classification (IPC):
**G05B 15/02** (2006.01)   **G06F 3/0483** (2013.01)

(52) Cooperative Patent Classification (CPC):
Y02P 90/02

(86) International application number:
**PCT/CN2024/082807**

(87) International publication number:
**WO 2024/193608 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023   CN 202310270674**

(71) Applicant: **Lumi United Technology Co., Ltd.
Shenzhen, Guangdong 518000 (CN)**

(72) Inventors:
- **CENG, Zhaoze**
  **Shenzhen, Guangdong 518000 (CN)**
- **HUANG, Binbin**
  **Shenzhen, Guangdong 518000 (CN)**
- **YAO, Qin**
  **Shenzhen, Guangdong 518000 (CN)**
- **HAN, Yang**
  **Shenzhen, Guangdong 518000 (CN)**
- **YANG, Jing**
  **Shenzhen, Guangdong 518000 (CN)**

(74) Representative: **Metida
Gyneju str. 16
01109 Vilnius (LT)**

(54) **DEVICE CONTROL METHOD AND APPARATUS, ELECTRONIC DEVICE, AND STORAGE MEDIUM**

(57)    The present application provides a device control method, apparatus, electronic device, and storage medium. The method includes: displaying a region editing page; the region editing page shows the current position of the target, and the region editing page is used to configure at least one monitoring region within the detection range of the sensing device based on the current position of the target; if a region editing operation is detected in the region editing page for configuring the monitoring region, and generating a custom monitoring region; displaying an automation configuration page for the monitoring region; in response to an automation configuration operation for the monitoring region in the automation configuration page, generating automation configuration schemes corresponding to the monitoring region; the automation configuration schemes are used to achieve automatic control of the controlled device by monitoring the region status of the monitoring region.

displaying a region editing page — 310

if a region editing operation is detected in the region editing page for configuring the monitoring region, and generating a custom monitoring region — 330

displaying an automation configuration page for the monitoring region — 350

in response to an automation configuration operation for the monitoring region in the automation configuration page, generating automation configuration scheme corresponding to the monitoring region — 370

FIG. 2

EP 4 685 584 A1

## Description

This application claims priority to Chinese Patent Application No. CN2023102706742, filed on March 20, 2023, titled "Device Control Method, Apparatus, Electronic Device, and Storage Medium," the entire content of which is incorporated herein by reference.

TECHNICAL FIELD

This application relates to the field of Internet of Things technology. Specifically, this application involves a device control method, apparatus, electronic device, and storage medium..

DESCRIPTION OF RELATED ART

With the development of Internet of Things technology, various smart devices are increasingly being applied in a wide range of scenarios. For example, the scenario may be a smart home setting or an office setting. Among them, smart devices usually include sensing devices and controlled devices. The sensing devices may be various types of sensors, while the controlled devices may be air conditioners, refrigerators, televisions, lights, and so on.

Taking the human body sensor in a smart home setting as an example, users may deploy human body sensors in different rooms. Once the human body sensor starts working, it may monitor whether there is anyone in the room. When it detects someone in the room, it may control the controlled devices in the room to operate, such as turning on the lights in the room.

However, since the monitoring range of the sensing device is relatively fixed, it is likely to cause incorrect device control. Still using the aforementioned example for illustration, the user places the human body sensor on the desk in the study, with the intention of turning on the desk lamp when someone approaches the desk. However the monitoring range of the human body sensor is not limited to the area near the desk; it also covers other areas of the study. This means that when the human body sensor detects someone in other areas of the study, it will also turn on the desk lamp.

From the above, it is clear that how to improve the precision of device control based on the fixed monitoring range of the sensing device remains to be solved.

SUMMARY

This application provides a device control method, apparatus, electronic device, and storage medium. The technical solution is as follows:

According to an aspect of the present application, a device control method is provided, which includes: displaying a region editing page; the region editing page shows the current position of the target, and the region editing page is used to configure at least one monitoring area within the detection range of the sensing device based on the current position of the target; if a region editing operation is detected in the region editing page for configuring the monitoring region, then generate a custom monitoring region; displaying an automation configuration page for the monitoring area; in response to an automation configuration operation for the monitoring area on the automation configuration page, generating automation configuration schemes corresponding to the monitoring area; the automation configuration schemes are used to achieve automated control of the controlled device by monitoring the region status of the monitoring area.

According to an aspect of the present application, a device control method is provided, which is executed by an electronic device and includes: acquiring the position of the target in each monitoring region, the monitoring region being generated based on an editing operation triggered in the region editing page; the region editing page is configured to configure at least one monitoring region within the detection range of the sensing device based on the current position of the target; determining the region status of each monitoring region based on the position of the target in each monitoring region; if the region status of the monitoring region satisfies the trigger condition in the corresponding automation configuration schemes, controlling the controlled device to perform a corresponding action based on the controlled data associated with the trigger condition in the automation configuration.

According to an aspect of the present application, a device control apparatus is provided, which includes: an editing page display module, used to display a region editing page; the region editing page shows the current position of the target, and the region editing page is used to configure at least one monitoring region within the detection range of the sensing device based on the current position of the target; a monitoring region generation module, used to generate a custom monitoring region if a region editing operation is detected in the region editing page for configuring the monitoring region; a configuration page display module, used to display an automation configuration page for the monitoring region; a configuration scheme generation module used to generate automation configuration schemes corresponding to the monitoring region in response to an automation configuration operation for the monitoring region in the automation configuration page; the automation configuration schemes are used to achieve automatic control of the controlled device by monitoring the region status of the monitoring region.

According to an aspect of the present application, an electronic device is provided, which includes at least one processor and at least one memory, wherein the memory stores computer-readable instructions; when the computer-readable instructions are executed by one or more of the processors, the device control method as described above is implemented.

According to an aspect of the present application, a computer-readable storage medium is provided, which stores computer-readable instructions; when the computer-readable instructions are executed by one or more processors, the device control method as described above is implemented.

According to an aspect of the present application, an application program product is provided, which includes program instructions or code, the program instructions or code are stored in a computer-readable storage medium, and a processor of an electronic device reads the program instructions or code from the computer-readable storage medium, loads and executes the program instructions or code, thereby enabling the electronic device to implement the device control method as described above.

BRIEF DESCRIPTION OF THE DRAWINGS

In order to more clearly illustrate the technical solutions provided by the present application, the figures used in the description of the various embodiments of the present application will be briefly introduced below. It is apparent that the figures described below are merely some embodiments of the present application. For those skilled in the art, other figures may be obtained based on these figures without making creative efforts.

FIG. 1 is a schematic diagram of the implementation environment involved in the embodiments of the present application;

FIG. 2 is a flowchart of a device control method according to an exemplary embodiment;

FIG. 3 is a schematic diagram of a region editing page of a device control method according to an exemplary embodiment;

FIG. 4a is a schematic diagram of a device page of a device control method according to an exemplary embodiment;

FIG. 4b is a schematic diagram of a monitoring page of a device control method according to an exemplary embodiment;

FIG. 4c is a schematic diagram of the monitoring attributes of each monitoring area of a device control method according to an exemplary embodiment;

FIG. 5a is a schematic diagram of a region editing page of a device control method according to an exemplary embodiment;

FIG. 5b is a schematic diagram of a region editing page of a device control method according to an exemplary embodiment.

FIG. 6a is a schematic diagram of an automation configuration page of a device control method according to an exemplary embodiment;

FIGs. 6b to 6c are schematic diagrams of the generation of automation schemes of a device control method according to an exemplary embodiment;

FIG. 7 is a flowchart of another device control method according to an exemplary embodiment;

FIG. 8 is a schematic diagram of different areas within the detection range of a device control method according to an exemplary embodiment;

FIG. 9a is a flowchart of a monitoring process of a device control method according to an exemplary embodiment;

FIG. 9b is a flowchart of a monitoring process of a device control method according to an exemplary embodiment;

FIG. 9c is a flowchart of a monitoring process of a device control method according to an exemplary embodiment;

FIG. 10 is a structural block diagram of a device control apparatus according to an exemplary embodiment;

FIG. 11 is a structural block diagram of another device control apparatus according to an exemplary embodiment;

FIG. 12 is a hardware structure diagram of a terminal according to an exemplary embodiment;

FIG. 13 is a structural block diagram of an electronic device according to an exemplary embodiment.

DETAILED DESCRIPTION OF THE EMBODIMENTS

The following is a detailed description of the embodiments of the present application. Examples of the embodiments are shown in the accompanying drawings, where the same or similar reference numerals throughout the drawings indicate the same or similar components or components having the same or similar functions. The embodiments described below with reference to the accompanying drawings are exemplary and are intended to explain the present application and should not be construed as limiting the present application.

To make the purposes, technical solutions, and advantages of the present application clearer, the implementation methods of the present application will be further described in detail below in combination with the accompanying drawings.

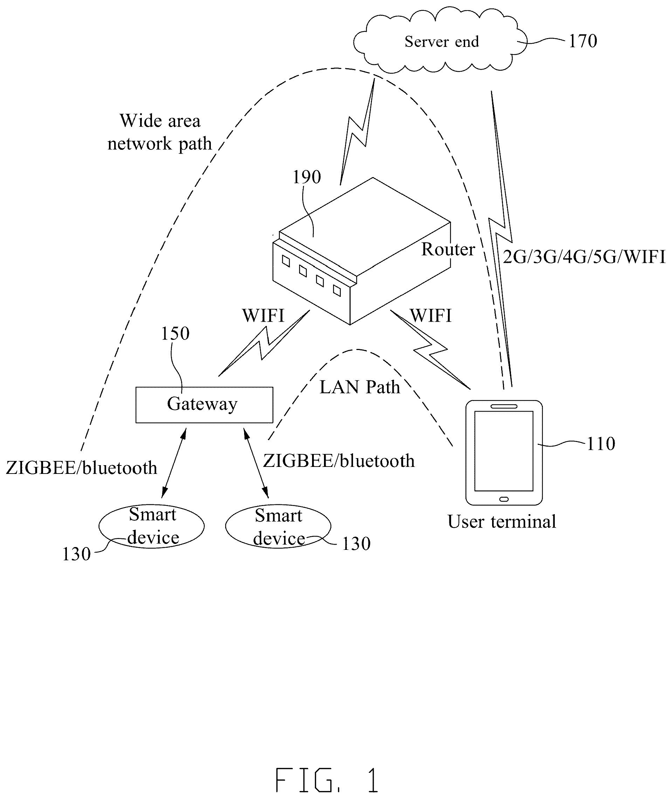

FIG. 1 is a schematic diagram of the implementation environment involved in a device control method. The implementation environment includes a user terminal 110, a smart device 130, a gateway 150, a server end 170, and a router 190 .

Specifically, the user terminal 110, which may also be considered as a user end or a terminal, may deploy (which may also be understood as install) a client associated with the smart device 130. The user terminal 110 may be electronic devices such as smartphones, tablets, laptops, desktop computers, smart control panels, and other devices with display and control functions, without limitation here.

The client, associated with the smart device 130, is essentially for users to register an account in the client and configure the smart device 130 in the client. For example, the configuration includes adding a device identifier for the smart device 130, etc., so that when the client is running on the user terminal 110, it may provide users with functions such as device display and device control related to the smart device 130. The client may be in the form of an application program or a web page. Correspondingly, the interface of the client for device display may be in the form of a program window or a web page, without limitation here.

The smart device 130 is deployed in the gateway 150 and communicates with the gateway 150 through its own configured communication module, thereby being controlled by the gateway 150. It should be understood that the smart device 130 generally refers to one of multiple smart devices, and this embodiment only takes the smart device 130 as an example. That is, this embodiment does not limit the number and types of smart devices deployed in the gateway 150. In one application scenario, the smart device 130 accesses the gateway 150 through a local area network and is thus deployed in the gateway 150. The process of the smart device 130 accessing the gateway 150 through a local area network includes: the gateway 150 first establishes a local area network, and the smart device 130 joins the local area network established by the gateway 150 by connecting to the gateway 150. This local area network includes but is not limited to ZIGBEE or Bluetooth. The smart device 130 may be a controlled device, such as a smart printer, smart fax machine, smart camera, smart air conditioner, smart door lock, smart light, smart refrigerator, natural gas alarm, smoke alarm, wall switch, wall socket, wireless switch, wireless wall sticker switch, Rubik's Cube controller, curtain motor, and other electronic devices. The smart device 130 may also be a sensing device, such as a radar device, human sensor, door and window sensor, temperature and humidity sensor, water immersion sensor, and other electronic devices equipped with a communication module. It is worth mentioning that for some smart devices 130, they may be both controlled devices and sensing devices. For example, a smart camera is both a controlled device and a sensing device. This is not a specific limitation on the type of smart device 130.

Interaction between the user terminal 110 and the smart device 130 may be realized through a local area network or a wide area network. In one application scenario, the user terminal 110 establishes a wired or wireless communication connection with the gateway 150 through the router 190. For example, the wired or wireless methods include but are not limited to WIFI, so that the user terminal 110 and the gateway 150 are deployed in the same local area network, thereby enabling the user terminal 110 to interact with the smart device 130 through a local area network path. In another application scenario, the user terminal 110 establishes a wired or wireless communication connection with the gateway 150 through the server end 170. For example, the wired or wireless methods include but are not limited to 2G, 3G, 4G, 5G, WIFI, etc., so that the user terminal 110 and the gateway 150 are deployed in the same wide area network, thereby enabling the user terminal 110 to interact with the smart device 130 through a wide area network path.

The server end 170 may also be considered as the cloud, cloud platform, platform end, server end, etc. The server end 170 may be a single server, a server cluster composed of multiple servers, or a cloud computing center composed of multiple servers, so as to better provide background services to a large number of user terminals 110. For example, the background services include device control services.

For the user, after the user terminal 110 displays a region editing page showing the current position of the target, the user may trigger an editing operation in the region editing page to configure at least one monitoring region within the target space of the sensing device based on the current position of the target.

For the user terminal 110, it may detect the editing operation and generate a custom monitoring region in response to the editing operation. It may then display an automation configuration page for the monitoring region and generate automation configuration schemes corresponding to the monitoring region in response to an automation configuration operation on the monitoring region in the automation configuration page. Based on the automation configuration schemes, it may achieve automatic control of the controlled device in the target space by monitoring the region status of the monitoring region.

In one application scenario, the sensing device reports the region status of each monitoring region to the gateway 150 through a local area network path, and then the gateway 150 notifies the controlled devices in each monitoring region to perform corresponding actions through a local area network path. In this way, the Internet is not required. As long as the sensing device and the controlled device are connected to the gateway 150, the above device control may be realized. Even in response to detecting the network is disconnected, it will not affect the above device control, thereby fully ensuring the success rate of device control.

In another application scenario, the sensing device reports the region status of each monitoring region to the server end 170 through a wide area network path, and then the server end 170 notifies the controlled devices in each monitoring region to perform corresponding actions through the wide area network path. In this way, the gateway does not need to be deployed, which is conducive to reducing the cost in the device control process.

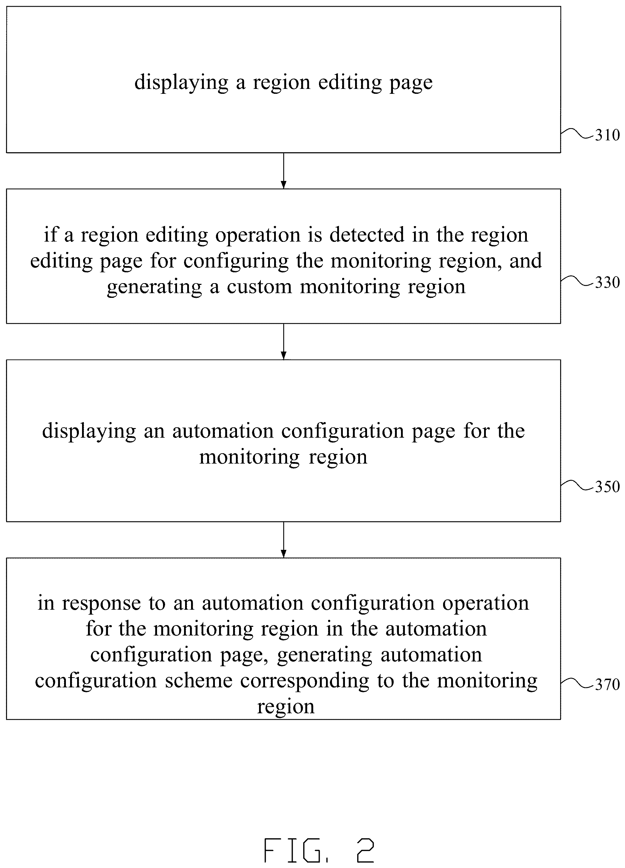

Please refer to FIG. 2, The embodiments of the present application provide a device control method, which is applicable to an electronic device. The electronic device may specifically be the user terminal 110 in the implementation environment shown in FIG. 1.

In the following method embodiments, for the sake of convenient description, the electronic device is taken as the executing subject of each step of the method, however this is not specifically limited. As shown in FIG. 2, the method may include the following steps:

Step 310, displaying a region editing page.

It should be noted that the region editing page shows the current position of the target. The target refers to an object that may move within the detection range of the sensing device. For example, the target may be a person, a robot, a pet, etc. It may be understood that as the target moves within the detection range, the position of the target detected by the sensing device within the detection range will change accordingly. Correspondingly, the position of the target displayed on the region editing page of the user terminal within the detection range will also change accordingly. This facilitates the user to more accurately and promptly adjust the monitoring region within the detection range based on the current position of the target in the detection range.

For the detection of the target's position, taking the sensing device as a radar device as an example, first obtain the azimuth angle Ø and elevation angle θ measured by the radar device itself, as well as the distance between the radar device and the target. Then, obtain the elevation angle Ø of the radar device during installation through an accelerometer. Finally, calculate the position (x, y, z) of the target using the following formula:

$$x = R * \cos(\theta + \emptyset) * \sin(\varphi)$$

$$y = R * \cos(\theta + \emptyset) * \cos(\varphi)$$

$$z = R * \sin(\theta + \emptyset)$$

In this way, by introducing the elevation angle of the radar device during installation through the accelerometer to correct the elevation angle measured by the radar device itself, the position of the target may be more accurately determined.

Secondly, the region editing page is configured to configure at least one monitoring region within the target space of the sensing device based on the current position of the target.

It should be understood that due to the sensing performance of the sensing device itself, the detection range of the sensing device is relatively fixed. The fixed detection range may cause incorrect device control. Therefore, in this embodiment, a region editing page is provided for configuring finer-grained monitoring regions within the target space of the sensing device. That is to say, the target space of the sensing device may be divided into multiple monitoring regions through the region editing page, so as to achieve more refined device control.

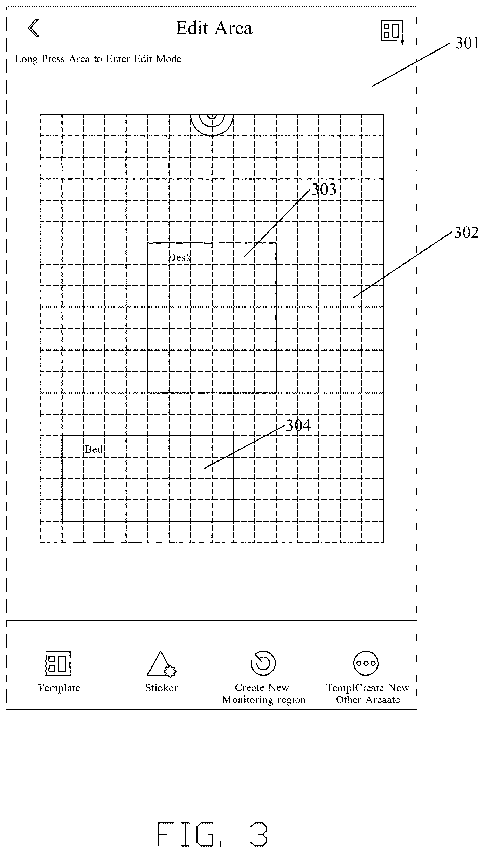

FIG. 3 illustrates a schematic diagram of the region editing page. As shown in FIG. 3, in the region editing page 301, area 302 may represent the detection range of the sensing device or the monitoring region corresponding to the target space. Area 303 represents the desk monitoring region, and area 304 represents the bed monitoring region. Based on this, taking the sensing device as a human sensor as an example, when the desk monitoring region detects a person, the desk lamp may be turned on; when the bed monitoring region detects a person, the reading lamp by the bed may be turned on. Conversely, whether it is the desk monitoring region or the bed monitoring region that detects a person, it is considered that a person is detected within the detection range of the sensing device. However, when a person is detected in the desk monitoring region, the reading lamp by the bed will not be turned on simply because a person is detected within the detection range. Similarly, when a person is detected in the bed monitoring region, the desk lamp will not be turned on simply because a person is detected within the detection range. In this way, refined control of controlled devices in different monitoring regions is achieved.

It should be noted that the monitoring regions within the detection range of the sensing device are represented by graphic markers in the region editing page. For example, in FIG. 3, the graphic marker is a rectangle. Of course, in other embodiments, the graphic marker may also be any other regular shape. This embodiment does not specifically limit this. In other words, the monitoring regions displayed in the region editing page are essentially graphic markers that have a mapping relationship with the monitoring regions within the detection range of the sensing device.

In one possible implementation, step 310 may include the following steps:

Step 311, display at least one device identifier in the device page.

Each device identifier is configured to represent a bound sensing device. Here, "bound" means that the sensing device has been connected to the server end, thereby enabling interaction between the sensing device and the server end. The server end may refer to the gateway 150 shown in FIG. 1, with which the sensing device interacts through a local area network path; the server end may also refer to the server end 170 shown in FIG. 1, with which the sensing device interacts through a wide area network path. With the binding of the sensing device, the corresponding device identifier of the sensing device may be added to the device page, thereby displaying the sensing device on the device page through the device identifier.

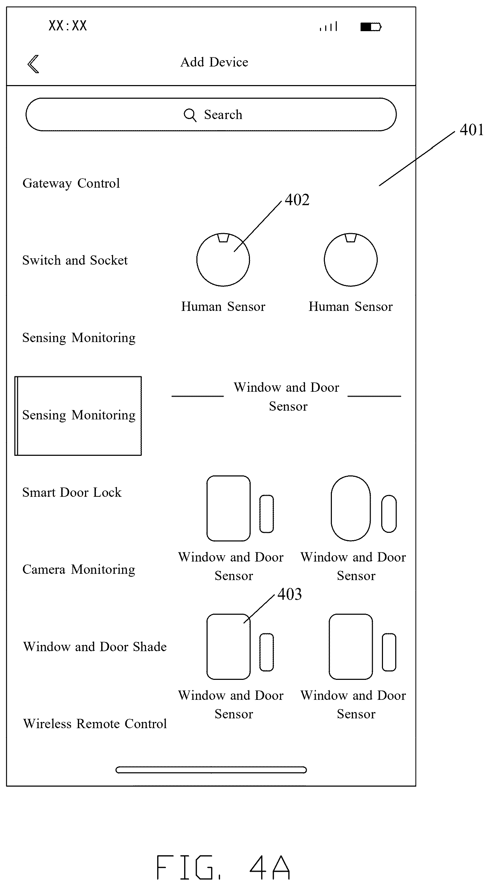

FIG. 4a illustrates a schematic diagram of the device page. As shown in FIG. 4a, in the device page 401, the user terminal displays various bound sensing devices corresponding to different device identifiers. For example, the sensing devices may include sensing monitoring devices. Specifically, a human sensor is represented by device identifier 402; the sensing devices may also include door and window sensors, represented by device identifier 403. Of course, in other embodiments, the device identifier is not limited to a combination of graphic markers and text markers. It may also be represented in any other form, such as the name of the sensing device entered by the user through the user terminal. This is not specifically limited here.

Step 313, if a selection operation on each of the device identifiers is detected, transitioning from the device page to the monitoring page corresponding to the sensing device.

The sensing device corresponds to the selected device identifier.

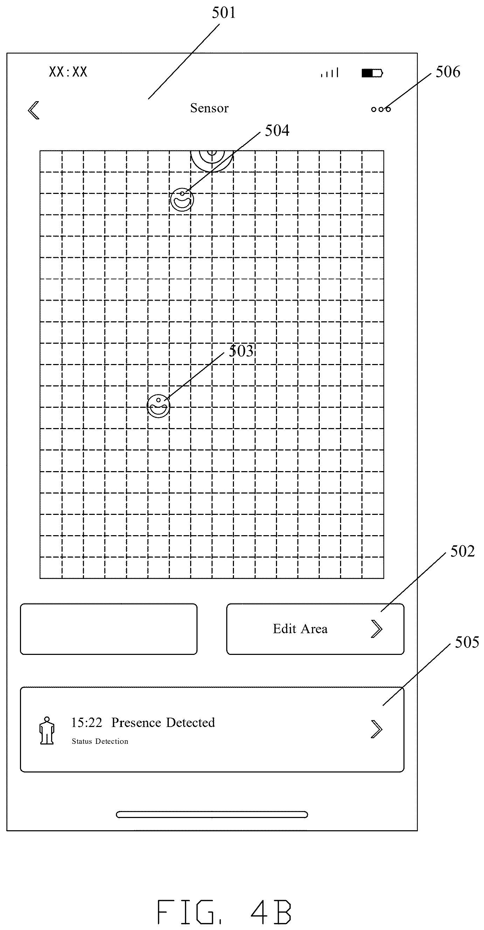

Continuing to refer to FIG. 4a, assuming that the user wishes to enter the monitoring page corresponding to the human sensor represented by device identifier 402, the user will click on device identifier 402. For the electronic device, it may detect this click operation and then display the monitoring page corresponding to the human sensor, as shown in FIG. 4b. Here, the click operation is considered a selection operation on device identifier 402.

It is worth mentioning that transitioning from the device page to the monitoring page corresponding to the sensing device may refer to the user terminal jumping from the device page to the monitoring page corresponding to the sensing device, or it may refer to the user terminal overlaying the monitoring page corresponding to the sensing device over the device page. This is not specifically limited here.

Step 315, display the monitoring page corresponding to the sensing device, the monitoring page displays a region editing entry.

The region editing entry is configured to configure at least one monitoring region within the detection range of the sensing device.

Step 317, in response to a trigger operation on the region editing entry, transitioning from the monitoring page to the region editing page.

FIG. 4b illustrates a schematic diagram of the monitoring page corresponding to the sensing device. As shown in FIG. 4b, the user terminal displays a region editing entry 502 in the monitoring page 501. Assuming that the user wishes to enter the region editing page from the monitoring page 501, the user will click on the region editing entry 502. For the user terminal, it may detect this click operation and then display the region editing page. Here, the click operation is considered a trigger operation on the region editing entry.

In one possible implementation, the monitoring page is also used to display the region status of each monitoring region. The region status of each monitoring region reflects the positional relationship between each monitoring region/sensing device/detection range and the target. For example, the positional relationship may be that there is a target in each monitoring region, or it may be that the target is away from each monitoring region. This is not specifically limited here, which is conducive to achieving refined device control based on the region status of each monitoring region.

The region status of each monitoring region and the position of the target within each monitoring region are monitored and reported by the sensing device to the server end to which the sensing device is connected, and then pushed by the server end to the user terminal for display.

In one possible implementation, the monitoring page also displays a device editing entry.

Continuing to refer to FIG. 4b, in the monitoring page 501, the user terminal also displays the positions 503 and 504 of the targets within each monitoring region, the region status of each monitoring region505, and the device editing entry 506. It should be noted that FIG. 4b exemplarily shows the positions of two targets within one monitoring region and the region status of one monitoring region on the monitoring page 501. This embodiment does not limit the number of targets or monitoring regions that may be displayed on the monitoring page.

Assuming that the user clicks on the device editing entry 506 through the user terminal, the user terminal may detect this click operation. Then, in response to the trigger operation on the device editing entry 506 (i.e., the click operation), the user terminal transitions from the monitoring page 501 to the device editing page, which facilitates the editing of the sensing device's monitoring attributes for each monitoring region using the device editing page.

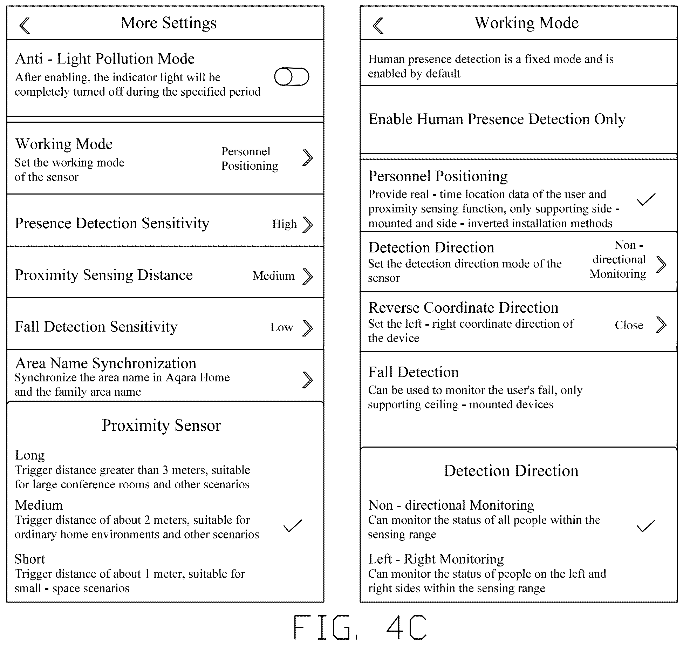

FIG. 4c illustrates a schematic diagram of the monitoring attributes of the sensing device for the monitoring region displayed on the device editing page. It should be noted that the device editing page may correspond to a single monitoring region or multiple monitoring regions simultaneously, without specific limitation. As shown in FIG. 4c, the monitoring attributes include, but are not limited to: proximity sensing distance, working mode, sensing sensitivity, and detection direction. The proximity sensing distance may be further divided into a "long" distance suitable for large space scenarios, a "short" distance suitable for small space scenarios, and a "medium" distance suitable for other space scenarios (such as smart home scenarios). It may also be considered that the sensing distance essentially reflects the sensing sensitivity of the sensing device. For example, a long distance indicates the lowest sensing sensitivity of the sensing device, while a short distance indicates the highest sensing sensitivity. For a human sensor, the working mode may be further divided into a personnel presence mode and a personnel positioning mode. The sensing sensitivity may be further divided into presence detection sensitivity and fall detection sensitivity. The detection direction may be further divided into directional monitoring from at least one direction of the monitoring region's up, down, left, and right. It may also include omnidirectional monitoring of all targets within the detectable area, that is, enabling "omnidirectional monitoring" for omnidirectional monitoring of targets. in response to detecting "omnidirectional monitoring" is disabled, directional monitoring of targets is performed.

It should be noted that, depending on the input components configured in the electronic device (such as a mouse, keyboard, display screen), the specific form of the above operations will vary. For example, in response to detecting the electronic device is a smartphone, based on the display screen configured in the smartphone, the above operations may be gesture operations such as clicking and sliding. In response to detecting the electronic device is a desktop computer, based on the mouse configured in the desktop computer, the above operations may be mechanical operations such as single-clicking, double-clicking, and dragging, without specific limitation.

With the display of the region editing page showing the current position of the target on the electronic device, the user may configure at least one monitoring region within the detection range of the sensing device based on the current position of the target based on the region editing page, which facilitates the refined control of devices.

Step 330, if a region editing operation is detected in the region editing page for configuring the monitoring region, and generating a custom monitoring region.

In one possible implementation, the editing operation triggered in the region editing page for configuring the monitoring region may include at least one of the following: an operation for editing the display range of the monitoring region when displayed on the region editing page, an operation for editing the name of the monitoring region, an operation for editing the type of the monitoring region, an operation for editing the background color of the monitoring region when displayed on the region editing page, and an operation for applying the edited monitoring region to the sensing device. The display range is configured to indicate the area occupied by the monitoring region within the detection range.

In one possible implementation, the above various editing operations are detected at the corresponding entries for editing the monitoring region. The process of displaying the entries corresponding to the various editing operations in the region editing page may include the following steps:

Step 410, in the region editing page, if a trigger operation on the region addition entry is detected or a trigger operation on a displayed monitoring region is detected, the region editing page is controlled to transition from the region display state to the region editing state..

The trigger operation on the region addition entry is for adding a new monitoring region; the trigger operation on the displayed monitoring region is for modifying an existing monitoring region.

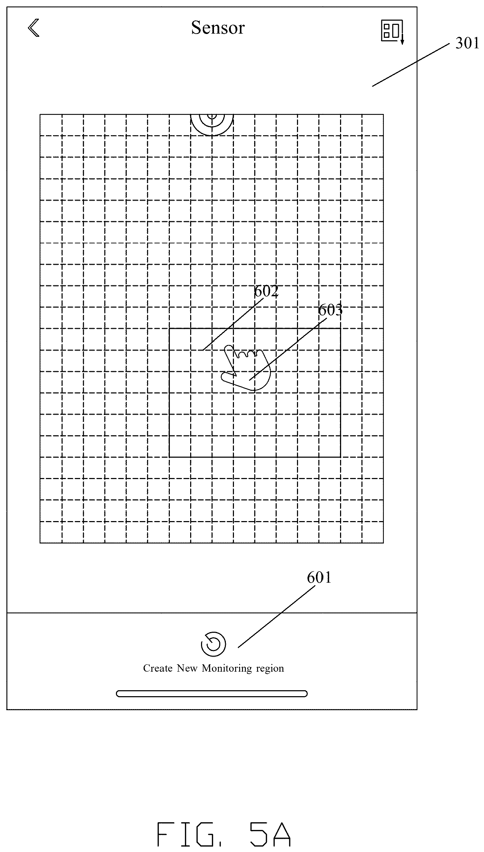

FIG. 5a illustrates a schematic diagram of the region editing page in the region display state. As shown in FIG. 5a, in the region editing page 301 in the region display state, the user may trigger the region editing page 301 to transition from the region display state to the region editing state by clicking on the region addition entry 601, in order to add a new monitoring region within the detection range of the sensing device. Additionally, for the monitoring region 602 already displayed in the region editing page 301, the user may also trigger the region editing page 301 to transition from the region display state to the region editing state by long - pressing 603 the monitoring region 602 through the user terminal, in order to modify the monitoring region 602 in the region editing page in the region editing state. Here, the click operation is considered as the trigger operation on the region addition entry, and the long - press operation is considered as the trigger operation on the displayed monitoring region.

Step 430: in the region editing page in the region editing state, edit each monitoring region in response to editing operations on each monitoring region.

In one possible implementation, the region editing page in the region editing state displays at least one entry for editing the monitoring region, so that editing operations may be detected at each entry, and the user terminal responds to the editing operations to edit each monitoring region.

In one possible implementation, the at least one entry for editing the monitoring region is displayed in the region editing page in the region editing state in the form of a floating window.

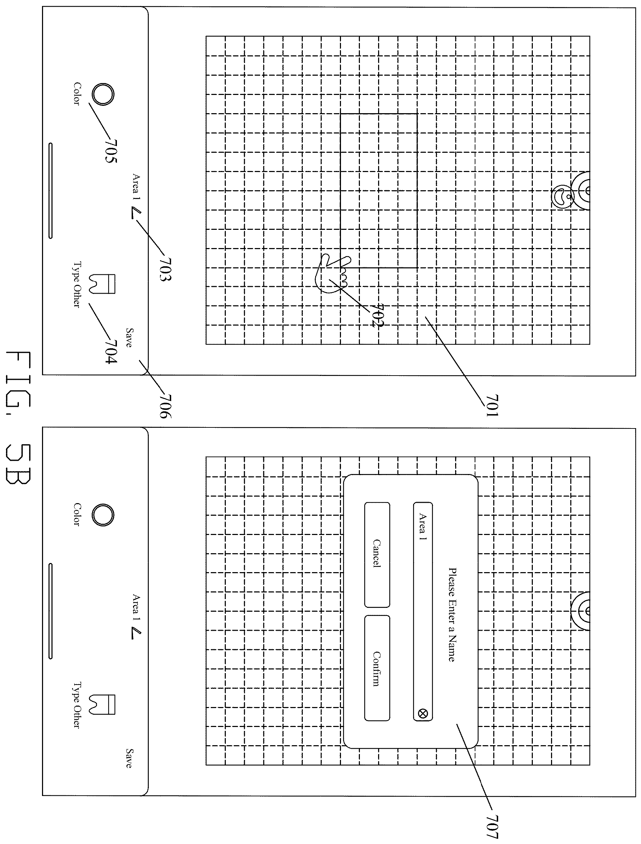

FIG. 5b illustrates a schematic diagram of the region editing page in the region editing state. As shown in FIG. 5b, after the region editing page enters the region editing state, the page correspondingly displays multiple entries for editing the monitoring region, including but not limited to: an entry 701 for editing the display range of the monitoring region (which is essentially the blank area of the region editing page), an entry 703 for editing the name of the monitoring region, an entry 704 for editing the type of the monitoring region, an entry 705 for editing the background color of the monitoring region, and an entry 706 for applying the edited monitoring region to the sensing device (which may also be considered as an entry for saving the edited monitoring region).

Taking the detection of an editing operation at entry 701 as an example, the user may select the display range of the monitoring region when displayed on the region editing page through a sliding gesture 702 at entry 701 on the user terminal, or select the display range of the monitoring region when displayed on the region editing page by clicking different grids presented on the region editing page multiple times at entry 701, thereby completing the editing of the display range of the monitoring region when displayed on the region editing page. Here, the sliding gesture or clicking operation is considered an operation for editing the display range of the monitoring region when displayed on the region editing page. It may be understood that the larger the selected display range of the monitoring region when displayed on the region editing page, the larger the area occupied by the monitoring region within the detection range of the sensing device. In one possible implementation, the display range of the region editing page is set with a predetermined number of grids, which may be flexibly set according to the actual needs of the application scenario. For example, one grid in the region editing page may be mapped to a 0.5 meter $\times$ 0.5 meter area within the detection range of the sensing device. In this way, not only is high-granularity monitoring region management of the sensing device's detection range facilitated, but also users may configure corresponding device control services for controlled devices within different monitoring regions, thereby facilitating refined device control and greatly enhancing user experience.

Alternatively, taking the detection of an editing operation at entry 703 on the user terminal as an example, the user clicks on entry 703, causing an input dialog box 707 to pop up on the region editing page. The user may then enter the name "Area 1" for the monitoring region in the input dialog box 707 and complete the input by clicking "OK," thereby completing the editing of the monitoring region's name. Here, the above clicking, inputting, and clicking operations are considered operations for editing the name of the monitoring region.

After the user completes the editing operation on the monitoring region through the user terminal, the user terminal may display the edited monitoring region on the region editing page. Referring back to FIG. 3, FIG. 3 shows a desk monitoring region 303 and a bed monitoring region 304 displayed on the region editing page 301. That is to say, based on the region editing page, the user has configured at least two monitoring regions within the detection range of the sensing device.

Step 350: displaying an automation configuration page for the monitoring region.

The automation configuration page is used to configure at least one of a trigger condition and a controlled action related to the monitoring region. The trigger condition is related to the region status of the monitoring region, and the controlled action refers to the corresponding action that the controlled device within the detection range needs to perform when the trigger condition is met.

The automation configuration page may be entered through an automation entry added in the region editing page on the user terminal, or through a dedicated automation entry in the client, without specific limitation here.

In one possible implementation, the automation configuration page is entered through an automation entry in the associated page corresponding to the sensing device. Specifically, step 350 may include the following steps: display the associated page corresponding to the sensing device, the associated page displays an automation entry; in response to a trigger operation on the automation entry, transitioning from the associated page to the automation configuration page.

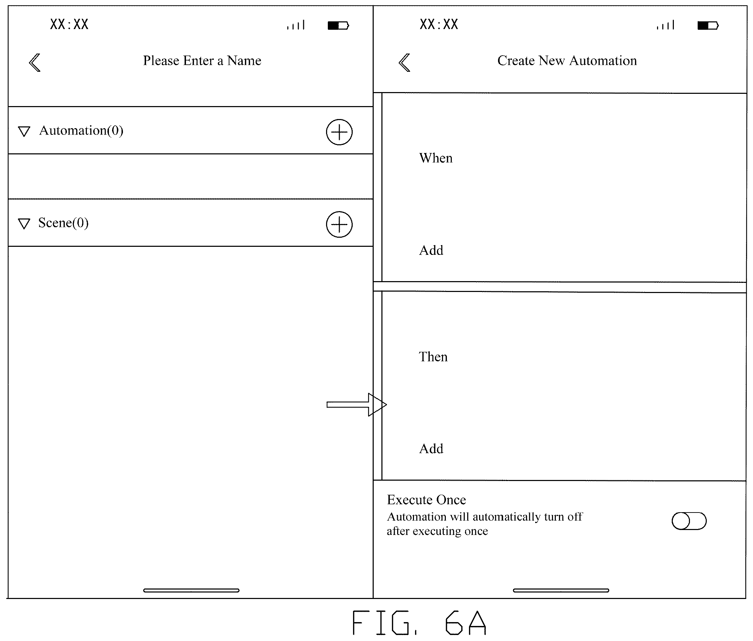

FIG. 6a illustrates a schematic diagram of entering the automation configuration page from the associated page. As shown in FIG. 6a, in the associated page 800, the user terminal displays an automation entry "Automation." When the user clicks on this automation entry, the user terminal transitions from the associated page 800 to the automation configuration page 801. In the automation configuration page 801, "when" is used to configure the trigger condition related to the monitoring region, and "then" is used to configure the controlled action related to the monitoring region. Here, the click operation is considered a trigger operation on the automation entry.

Step 370: in response to an automation configuration operation for the monitoring region in the automation configuration page, generating automation configuration scheme corresponding to the monitoring region.

The automation configuration schemes are used to achieve automatic control of the controlled device by monitoring the region status of the monitoring region.

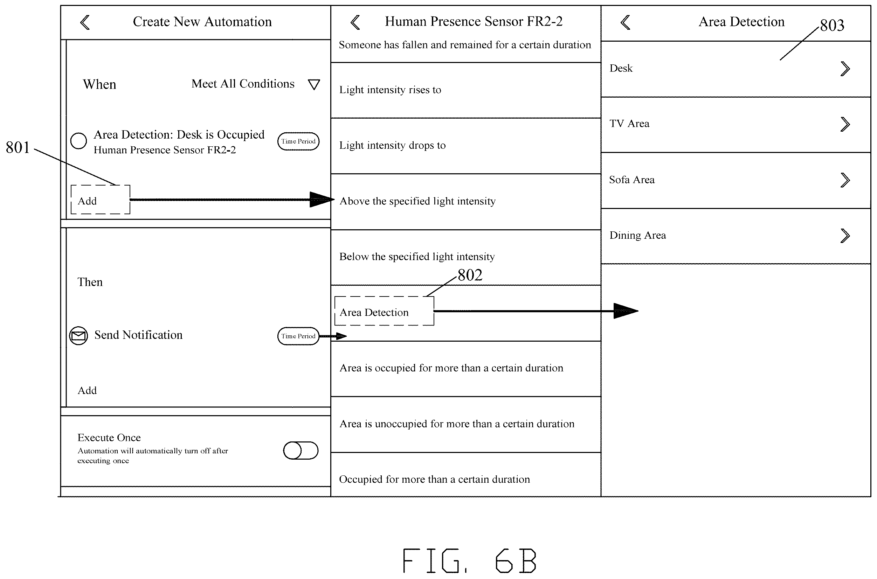

Please refer to FIG. 6b. After the user clicks on "when," the user terminal may transition from the automation configuration page 801 to page 802. In page 802, if the user continues to click on "area detection," the user terminal may enter page 803 to view the monitoring regions for which automation configuration schemes may be generated. For example, in FIG. 6b, the monitoring regions may include TV area, coffee table area, sofa area, dining area, etc.

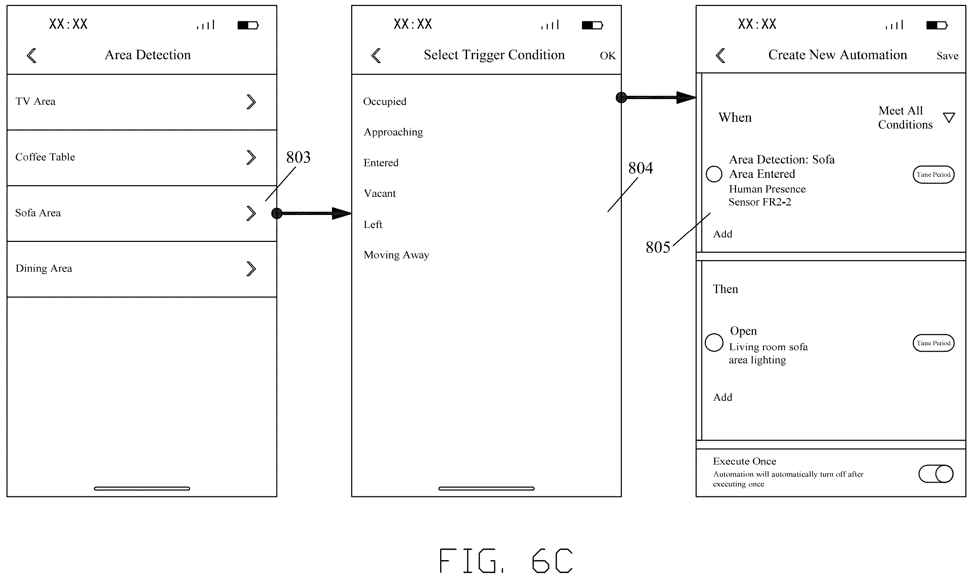

After determining the monitoring region in page 803, as shown in FIG. 6c, the user terminal may enter page 804 to configure the corresponding trigger condition for the monitoring region of the sensing device. For example, the trigger condition may include, but is not limited to: the region status of the monitoring region indicating that there is someone in the monitoring region, no one in the monitoring region, someone approaching/entering the monitoring region, someone leaving/moving away from the monitoring region.

Similarly, the process of configuring the controlled action is similar. That is, when the user terminal detects an automation configuration operation on the controlled action entry, it configures the controlled data associated with the trigger condition. The controlled data is used to instruct the controlled device to perform the corresponding action. This is not repeated here.

After completing the configuration of at least one of the trigger condition and the controlled action for the determined monitoring region, the user terminal may generate automation configuration schemes corresponding to the monitoring region. As shown in FIG. 6c, the detection range of the sensing device is the living room, and the monitoring region in the living room includes the sofa area. The trigger condition for this sofa area is that someone enters the sofa area, and the controlled action is to turn on the lighting lamp located in the sofa area of the living room.

Thus, by monitoring whether the region status of the sofa area indicates that someone has entered the sofa area, the user terminal may achieve automated control of whether to turn on the lighting lamp located in the sofa area of the living room.

In other words, when the monitoring regions displayed in the region editing page are applied to the sensing device, the sensing device will monitor the region status of each monitoring region and report the region status of each monitoring region to the server to which the sensing device is connected. For example, the server may be the gateway 150 or the server end 170 shown in the implementation environment in FIG. 1.

Correspondingly, after receiving the region status of each monitoring region reported by the sensing device, the server may determine whether to perform refined device control on the controlled devices within each monitoring region based on the region status of each monitoring region monitored by the sensing device. As mentioned earlier, if a human sensor detects someone in the desk monitoring region, the server may turn on the desk lamp; if a human sensor detects someone in the bed monitoring region, the server may turn on the reading lamp by the bed.

Through the above process, the configuration of at least one monitoring region within the detection range of the sensing device is completed. The controlled devices within the detection range may perform corresponding actions triggered by the region status of each monitoring region within the detection range, making the monitoring of the region status of each monitoring region independent and non - interfering with each other. Moreover, the relationship between each target and each monitoring region is also independent, achieving refined device control. This effectively solves the problem in the related technology that device control is difficult to be precise due to the fixed detection range of the sensing device.

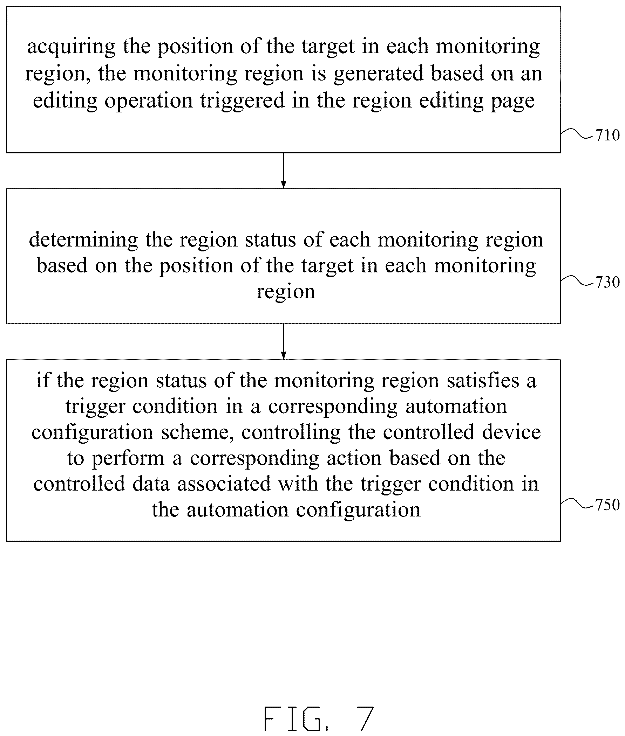

Please refer to FIG. 7. The embodiments of the present application provide a device control method, which is applicable to an electronic device. The electronic device may be a sensing device, specifically the smart device 130 shown in the implementation environment in FIG. 1. For example, the smart device 130 may be a radar device, a human sensor, or other electronic devices. The electronic device may also be the gateway 150 or the server end 170 shown in the implementation environment in FIG. 1. In the following method embodiments, for the sake of convenient description, the electronic device is taken as the executing subject of each step of the method, however this is not specifically limited. As shown in FIG. 7, the method may include the following steps:

Step 710, acquiring the position of the target in each monitoring region, the monitoring region is generated based on an editing operation triggered in the region editing page.

The region editing page is configured to configure at least one monitoring region within the detection range of the sensing device according to the current position of the target.

Step 730, determining the region status of each monitoring region based on the position of the target in each monitoring region.

That is to say, the region status of each monitoring region reflects the positional relationship between the target and at least one of the monitoring region, the sensing device, and the detection range at different times.

Step 750, if the region status of the monitoring region satisfies a trigger condition in a corresponding automation configuration scheme, controlling the controlled device to perform a corresponding action based on the controlled data associated with the trigger condition in the automation configuration.

In the above process, the region status of each monitoring region detected by the sensing device is reported to the connected server end. On the one hand, the server end may be the gateway 150 shown in the implementation environment in FIG. 1, and then the gateway notifies the controlled devices in each monitoring region to perform corresponding actions through the local area network path. On the other hand, the server end may be the server end 170 shown in the implementation environment in FIG. 1, and then the server end notifies the controlled devices in each monitoring region to perform corresponding actions through the wide area network path. It may be understood that the detection results and area automation control may be completed inside the sensing device. Therefore, even in the case of network disconnection, as long as the local area network is not disconnected, it may be executed through the local area network, which greatly improves the stability of area monitoring and area automation execution.

In other words, when the target enters different monitoring regions within the detection range of the sensing device, the electronic device may achieve refined device control for different monitoring regions.

In an exemplary embodiment, step 730 may include the following steps:

Step 731, for each monitoring region, determining the positional relationship between the target and the monitoring region at different times based on the position of the target in the monitoring region.

Step 733, determining the region status of the monitoring region based on the positional relationship between the target and the monitoring region at different times.

The region status of the monitoring region essentially reflects the positional relationship between the target and at least one of the monitoring region, the sensing device, and the detection range.

In one possible implementation, the monitoring method used by the sensing device to monitor the status of each monitoring region includes at least one of the following: directional monitoring and non - directional monitoring. Directional monitoring refers to monitoring targets in the up - down direction / left - right direction within each monitoring region / detection range. Non - directional monitoring refers to monitoring all targets within each monitoring region / detection range.

Then, step 733 may include the following steps: if the sensing device has directional monitoring capability, determining the direction in which the target enters the monitoring region based on the positional relationship between the target and the monitoring region at different times; determining the region status of the monitoring region based on the determined direction and positional relationship.

In one possible implementation, the monitoring method used by the sensing device to monitor the region status of each monitoring region includes at least one of the following: target mobility monitoring and target presence monitoring. Target mobility monitoring refers to monitoring whether there are targets entering / approaching / leaving / moving away from each monitoring region / detection range. Target presence monitoring refers to monitoring whether there are targets in each monitoring region / detection range.

In one possible implementation, the region status of the monitoring region may include at least one of the following: the target entering the detection range of the sensing device, the target leaving the detection range of the sensing device, the target entering the monitoring region, the target leaving the monitoring region, the target approaching the monitoring region, the target moving away from the monitoring region, the target approaching the sensing device, the target moving away from the sensing device, the presence of targets in the detection range, the absence of targets in the detection range, the presence of targets in the monitoring region, and the absence of targets in the monitoring region. It should be noted that the target approaching the sensing device may be considered a special case of the target approaching the monitoring region. In this special case, the target is approaching the monitoring region where the sensing device is located. Similarly, the target moving away from the sensing device may be considered a special case of the target moving away from the monitoring region, that is, the target is moving away from the monitoring region where the sensing device is located.

In one possible implementation, in combination with directional detection, the region status of the monitoring region may also include at least one of the following: the target entering the detection range of the sensing device from the left / right side, the target leaving the detection range of the sensing device from the left / right side, the target entering the monitoring region from the left / right side, the target leaving the monitoring region from the left / right side, the target entering the detection range of the sensing device from the top / bottom side, the target leaving the detection range of the sensing device from the top / bottom side, the target entering the monitoring region from the top / bottom side, and the target leaving the monitoring region from the top / bottom side.

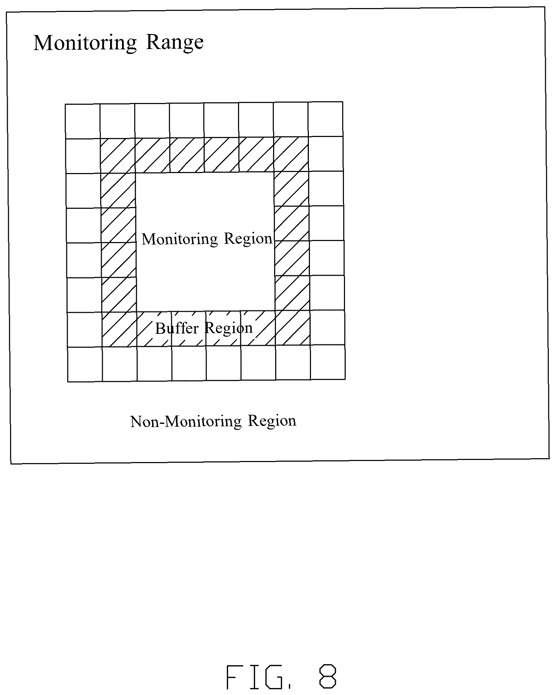

It should be noted that the target entering the monitoring region is different from the target approaching the monitoring region. FIG. 8 illustrates a schematic diagram of different areas within the detection range of the sensing device. In FIG. 8, the detection range of the sensing device includes at least one monitoring region, and a buffer area is set at the boundary of the monitoring region to isolate the monitoring region from the non - monitoring region through this buffer area. It should be noted that the non - monitoring region is only relative to the monitoring region however it still within the detection range of the sensing device.

Based on this, when the target enters the buffer area, it is only considered that the target is approaching the monitoring region. However, when the target leaves the buffer area and enters the monitoring region, it may then be considered that the target has entered the monitoring region. Similarly, the electronic device uses the buffer area between the monitoring region and the non - monitoring region to distinguish between the target leaving the monitoring region and the target moving away from the monitoring region. In this way, it avoids the situation where the sensing device, when locating the target at the boundary of the monitoring region, causes the target to jump back and forth between the monitoring and non - monitoring regions due to noise. This effectively improves the accuracy of the region status of each monitoring region detected by the sensing device. It also avoids incorrect device control caused by repeated changes in the region status of the monitoring region, thereby further improving the accuracy of device control.

Therefore, step 733 may include the following steps: based on the positional relationship between the target and the monitoring region at different times, if the positional relationship indicates that the target is currently located in the buffer area, determining whether the target was approaching the non - monitoring region in the preceding time; the buffer area is located between the monitoring region and the non - monitoring region; if not, determining that the region status of the monitoring region is that the target is approaching the monitoring region.

It should be added that the difference between entering the monitoring region and the presence of a target in the monitoring region lies in the different monitoring methods. That is, entering the monitoring region belongs to target mobility monitoring, while the presence of a target in the monitoring region belongs to target presence monitoring. In other words, the two may be considered the same area region status.

When the monitoring regions displayed in the region editing page of the user terminal are applied to the sensing device, the sensing device will monitor the region status of each monitoring region to obtain the region status of each monitoring region.

Step 751, determining whether the region status of the monitoring region satisfies the trigger condition in the automation configuration schemes.

The automation configuration schemes are configured based on the region status of the monitoring region and the actions executed by the controlled devices within the monitoring region. In other words, the automation configuration schemes include a trigger condition and device control data. The trigger condition is configured to confirm whether the region status of the monitoring region is satisfied, and the device control data is configured to instruct the controlled devices within the monitoring region to perform corresponding actions.

If it is determined that the region status of the monitoring region satisfies the trigger condition in the automation configuration schemes, then proceed to step 753.

Conversely, if it is determined that the region status of the monitoring region does not satisfy the trigger condition in the automation configuration schemes, the electronic device continues to execute step 751 until the region status of the monitoring region satisfies the trigger condition in the automation configuration schemes, and then proceeds to step 753 to execute device control.

It should be noted that in this embodiment, the region status of each monitoring region detected by the sensing device may be pushed to the user terminal via the connected server end, so that the user terminal may achieve refined device control based on the region status of each monitoring region.

Step 753, if the region status of the monitoring region satisfies the trigger condition in the corresponding automation configuration schemes, control the controlled device to perform a corresponding action based on the controlled data associated with the trigger condition in the automation configuration schemes.

With the effect of the above - mentioned embodiments, the region status of each monitoring region under various monitoring methods is monitored, which serves as the trigger basis for device linkage. This enables refined automatic device control and improves user experience. For example, in a smart home scenario, when a user enters the bathroom, the human body sensor deployed in the bathroom works, if it detects that someone is in the toilet monitoring region, it may accurately control the toilet to perform the action of opening the toilet seat cover, which greatly facilitates the user's smart home life.

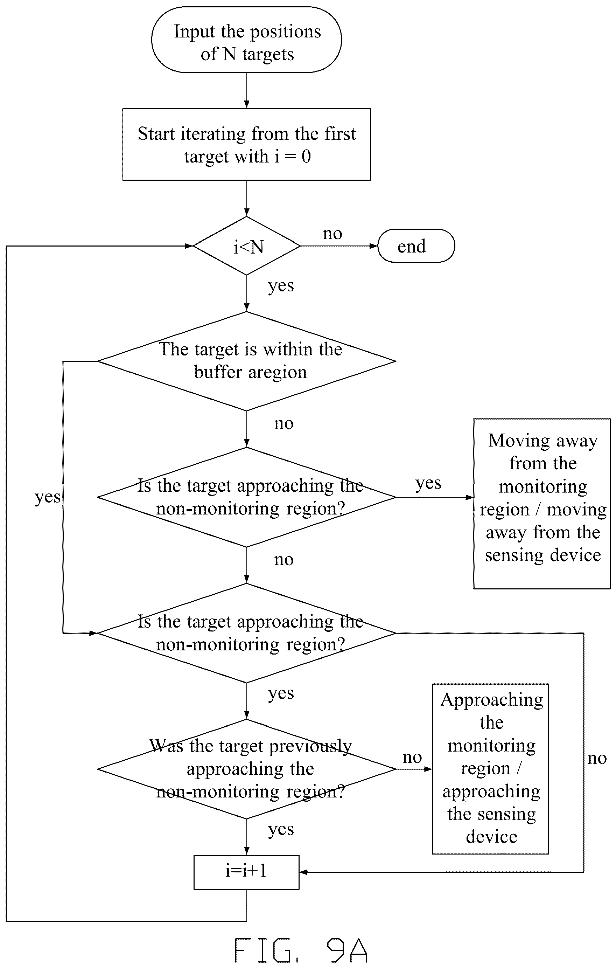

In one embodiment, FIG.s 9a to 9c illustrate the monitoring process of the region status of each monitoring region. FIG. 9a illustrates the monitoring process of the region status of at least one of approaching and moving away from the monitoring region. Based on the monitoring process shown in FIG. 9a, the region status of each monitoring region that may be detected by the sensing device includes the target approaching the monitoring region and the target moving away from the monitoring region.

Specifically, the target may be a human body. The electronic device acquires the coordinate information of N targets within the detection range and iterates through the position of each target. If it is identified that the target is outside the buffer area and was previously inside the buffer area, it is considered that the target is moving away from the sensing device. The purpose of setting the buffer area is that there is a certain error in the target coordinates output by radar target detection. Without setting the buffer area, at the boundary of the detection range, it may continuously report that the target is approaching or moving away from the sensing device. If the target is within the approaching - away area and the last detection result was not within the approaching - away area, it is determined that the target is approaching the sensing device.

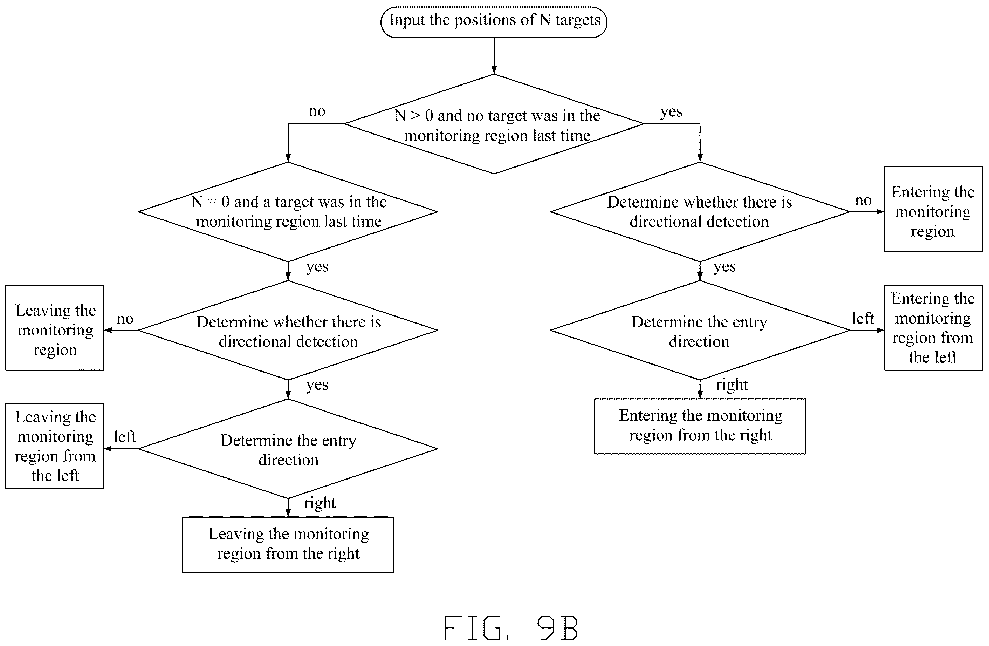

FIG. 9b illustrates the monitoring process of the region status of at least one of entering and leaving the monitoring region in combination with directional detection. Based on the monitoring process shown in FIG. 9b, the region status of each monitoring region that may be detected by the sensing device includes the target entering the monitoring region, the target leaving the monitoring region, the target entering the monitoring region from the left, the target leaving the monitoring region from the left, the target entering the monitoring region from the right, and the target leaving the monitoring region from the right.

Specifically, taking the target as a human body as an example, the entire monitoring region is judged based on the first person entering and the last person leaving. The steps are as follows:

Determining whether it is the first person entering. The judgment condition is that the last detection result was that there was no one in the area, however this time it is detected that there is someone in the area.

If it is the first person entering, determining whether the detection direction is directional or non - directional to output corresponding information. If the detection direction is non - directional, the electronic device reports that someone has entered and there is someone in the area.

If the detection direction is directional, determining the direction of entry. If it is entering from the left, the electronic device sends that it is entering from the left and there is someone in the area. If it is entering from the right, it sends that it is entering from the right and there is someone in the area.

Determining whether it is the last person leaving. The judgment condition is that the last detection result was that there was someone in the area, however this time it is detected that there is no one in the area.

If it is the last person leaving, determining whether it is directional or non - directional detection and output corresponding information. If it is non - directional detection, the electronic device reports that someone has left and there is no one in the area

If it is directional detection, determining the direction of entry. If it is leaving from the left, the electronic device sends that it is leaving from the left and there is no one in the area. If it is leaving from the right, it reports that it is leaving from the right and there is no one in the area.

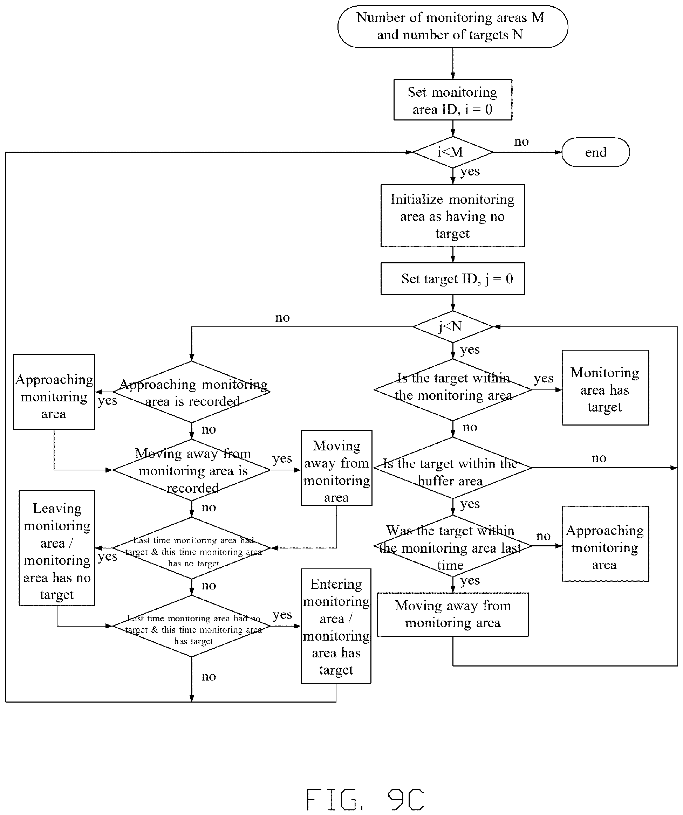

FIG. 9c illustrates the monitoring process of the region status of the monitoring region in combination with target mobility monitoring and target presence monitoring. Based on the monitoring process shown in FIG. 9c, the region status of each monitoring region that may be detected by the sensing device includes the presence of a target in the monitoring region, the absence of a target in the monitoring region, the target approaching the monitoring region, the target moving away from the monitoring region, the target entering the monitoring region, and the target leaving the monitoring region.

Specifically, the area automation judgment is performed for each monitoring region. Each monitoring region is independent and needs to be compared with each target. The judgment logic is as follows:.

The electronic device sets the region status of monitoring region i to unoccupied.

The electronic device compares monitoring region i with all targets, if a target is within the monitoring region, the region status of monitoring region i is set to occupied.

The electronic device determines whether the target is within the buffer area.

If the target is within the buffer area and was previously outside monitoring region i, it is determined that someone is approaching monitoring region i.

If the target is within the buffer area and was previously inside monitoring region i, it is determined that someone is moving away from monitoring region i.

The electronic device iterates through all targets.

If someone approaching monitoring region i is recorded, the electronic device sends a signal indicating that someone is approaching monitoring region i.

If someone moving away from monitoring region i is recorded, the electronic device reports that someone is moving away from monitoring region i.

If the previous frame's entire region status was occupied and the current status is unoccupied, the electronic device reports that someone has left monitoring region i and that monitoring region i is now empty.

If the previous frame's entire region status was unoccupied and the current status is occupied, the electronic device reports that someone has entered monitoring region i and that monitoring region i now has a person.

The electronic device iterates through all monitoring regions and outputs the monitoring results.

In this embodiment, by setting the buffer area for approaching and moving away, it prevents the target at the boundary from frequently reporting the presence or absence of a person due to measurement noise from the sensing device. This effectively improves the accuracy of the region status of each monitoring region detected by the sensing device. It also avoids incorrect device control caused by repeated changes in the region status of the monitoring region, thereby further improving the accuracy of device control.

It should be understood that although the steps in the flowcharts of FIG.s 2, 7, and 9a-9c are displayed in sequence according to the direction of the arrows, these steps are not necessarily performed in the order indicated by the arrows. Unless explicitly stated otherwise in this text, there is no strict order of execution for these steps, and they may be performed in other sequences. Moreover, at least some of the steps in FIG.s 2, 7, and 9a-9c may include multiple sub-steps or stages, which do not necessarily have to be completed at the same moment; however, they may be executed at different times. The order of execution for these sub-steps or stages is not necessarily sequential; however it may be performed alternately or in rotation with other steps or sub-steps or stages of other steps.

The following is a description of the device control apparatus embodiments of the present application, which may be used to execute the device control method involved in the present application. For details not disclosed in the apparatus embodiments of the present application, please refer to the method embodiments of the device control method involved in the present application.

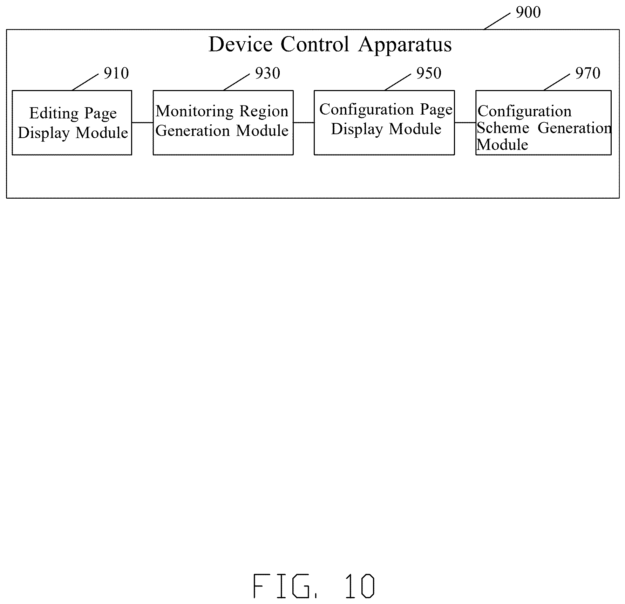

Please refer to FIG. 10. The embodiments of the present application provide a device control apparatus 900, which includes but is not limited to: an editing page display module 910, a monitoring region generation module 930, a configuration page display module 950, and a configuration scheme generation module 970.

The editing page display module 910 is configured to display a region editing page; the region editing page shows the current position of the target and is used to configure at least one monitoring region within the detection range of the sensing device based on the current position of the target.

The monitoring region generation module 930 is configured to generate a custom monitoring region if a region editing operation is detected in the region editing page for configuring the monitoring region.

The configuration page display module 950 is configured to display an automation configuration page for the monitoring region.

The configuration scheme generation module 970 is configured to generate automation configuration schemes corresponding to the monitoring region in response to an automation configuration operation on the monitoring region in the automation configuration page. The automation configuration schemes are configured to achieve automatic control of the controlled device by monitoring the region status of the monitoring region.

In an exemplary embodiment, the configuration page display module includes: an associated page display unit, configured to display an associated page corresponding to the sensing device; the associated page displays an automation entry; a configuration page entry unit, configured to in response to a trigger operation on the automation entry, transitioning from the associated page to the automation configuration page; the automation configuration page is used to configure at least one of a trigger condition and a controlled action related to the monitoring region.

In an exemplary embodiment, the configuration scheme generation module includes: a trigger condition configuration unit, configured to configure a corresponding trigger condition for the monitoring region of the sensing device in the automation configuration page in response to detecting an automation configuration operation on the trigger condition configuration control; a configuration scheme generation unit, configured to generate the automation configuration schemes based on the completed trigger condition configuration, and display the automation configuration schemes on the automation configuration page.

In an exemplary embodiment, the configuration scheme generation module includes: a controlled data configuration unit, configured to configure device control data associated with the trigger condition in response to detecting an automation configuration operation on the controlled action entry; the device control data is configured to instruct the controlled device to perform a corresponding action; a configuration scheme display unit, configured to generate the automation configuration schemes based on the completed device control data configuration, and display the automation configuration schemes on the automation configuration page.

In an exemplary embodiment, the editing page display module includes: a monitoring page display unit, configured to display a monitoring page corresponding to the sensing device; the monitoring page displays a region editing entry; an editing page entry unit, configured to enter the region editing page from the monitoring page in response to a trigger operation on the region editing entry.

In an exemplary embodiment, the monitoring page display unit includes: an identifier display sub - unit, configured to display at least one device identifier in the device page; each device identifier is configured to represent a bound sensing device; a monitoring page entry sub - unit, configured to enter the monitoring page corresponding to the sensing device from the device page in response to a selection operation on each device identifier; the sensing device corresponds to the selected device identifier.

In an exemplary embodiment, the apparatus further includes: an entry display module, configured to display a device editing page; the device editing page displays at least one entry for editing the monitoring attributes of the sensing device for the monitoring region; an attribute editing module, configured to edit the monitoring attributes of the sensing device for the monitoring region in response to an attribute editing operation on at least one entry, so that the sensing device monitors the region status of the monitoring region based on the edited monitoring attributes.

In an exemplary embodiment, the apparatus further includes: a state switching module, configured to control the region editing page to switch from a region display state to a region editing state in response to detecting a trigger operation on a region addition entry or a trigger operation on a displayed monitoring region in the region editing page; in the region editing state of the region editing page, edit each monitoring region in response to editing operations on each monitoring region.

In an exemplary embodiment, the apparatus further includes: a state switching module, configured to control the region editing page to switch from a region display state to a region editing state in response to detecting a trigger operation on a displayed monitoring region in the region editing page; in the region editing state of the region editing page, edit each monitoring region in response to editing operations on each monitoring region.

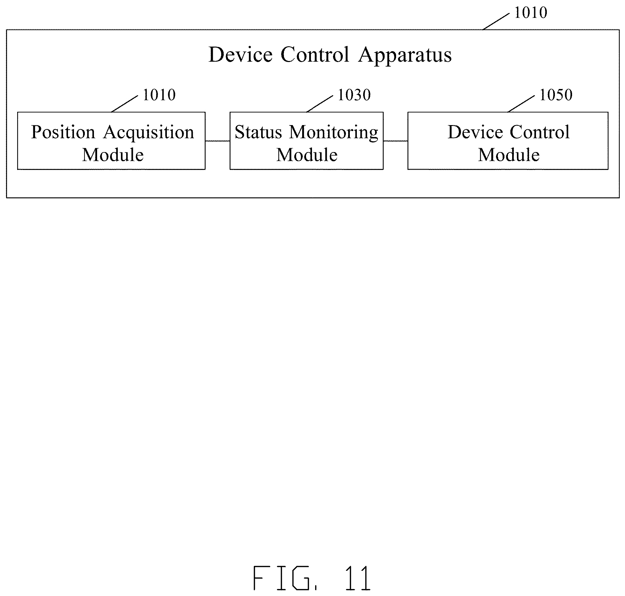

Please refer to FIG. 11. The embodiments of the present application provide a device control apparatus 1000, which includes but is not limited to: a position acquisition module 1010, a status monitoring module 1030, and a device control module 1050.

The position acquisition module 1010 is configured to acquire the position of the target in each monitoring region, the monitoring region is generated based on an editing operation triggered in the region editing page; the region editing page is configured to configure at least one monitoring region within the detection range of the sensing device based on the current position of the target.

The status monitoring module 1030 is configured to determine the region status of each monitoring region based on the position of the target in each monitoring region.

The device control module 1050 is configured to control the controlled device to perform a corresponding action based on the controlled data associated with the trigger condition in the automation configuration if the region status of the monitoring region satisfies the trigger condition in the corresponding automation configuration schemes.

In an exemplary embodiment, the status monitoring module includes: a position relationship determination unit, configured to determine the positional relationship between the target and the monitoring region at different times based on the position of the target in each monitoring region; a region status determination unit, configured to determine the region status of the monitoring region based on the positional relationship between the target and the monitoring region over time.

In an exemplary embodiment, the region status determination unit includes: a direction determination sub - unit, configured to determine the direction in which the target enters the monitoring region based on the positional relationship between the target and the monitoring region at different times if the sensing device has directional monitoring capability; a first status determination sub - unit, configured to determine the region status of the monitoring region based on the determined direction and the positional relationship.

In an exemplary embodiment, the region status determination unit includes: a buffer area determination sub - unit, configured to determine whether the target was approaching the non - monitoring region in the preceding time based on the positional relationship between the target and the monitoring region at different times if the positional relationship indicates that the target is currently located in the buffer area; the buffer area is located between the monitoring region and the non - monitoring region; a second status determination sub - unit, configured to determine that the region status of the monitoring region is that the target is approaching the monitoring region if the target was not approaching the non - monitoring region in the preceding time.

It should be noted that the device control apparatus described in the above embodiments is only an example of the division of functional modules for device control. In actual applications, the above functions may be distributed to different functional modules according to needs, that is, the internal structure of the device control apparatus may be divided into different functional modules to complete all or part of the functions described above.

In addition, the device control apparatus described in the above embodiments and the device control method belong to the same concept. The specific ways in which each module performs operations have been described in detail in the method embodiments, and will not be repeated here.

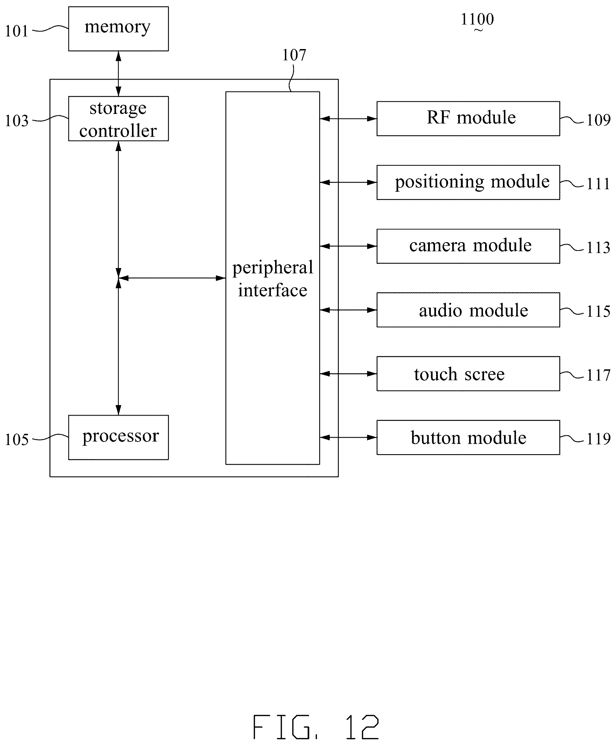

Please refer to FIG. 12. FIG. 12 is a structural diagram of a terminal according to an exemplary embodiment. The terminal is applicable to the user terminal 110 shown in the implementation environment in FIG. 1.

It should be noted that the terminal is only an example adapted to the present application and should not be considered as providing any limitation on the scope of use of the present application. The terminal should not be interpreted as necessarily relying on or having one or more components shown in the exemplary terminal 1100 in FIG. 12.

As shown in FIG. 12, the terminal 1100 includes a memory 101, a storage controller 103, one or more (only one is shown in FIG. 12) processors 105, a peripheral interface 107, a radio frequency module 109, a positioning module 111, a camera module 113, an audio module 115, a touch screen 117, and a button module 119. These components communicate with each other through one or more communication buses / signal lines 121.

The memory 101 may be used to store program instructions or code, such as the program instructions or code corresponding to the device control method and apparatus in the exemplary embodiments of the present application. The processor 105 executes various functions and data processing by running the program instructions or code stored in the memory 101, that is, to complete the device control method.

The memory 101, as a carrier for resource storage, may be random access memory, such as high - speed random access memory, non - volatile memory, such as one or more magnetic storage devices, flash memory, or other solid - state memory. The storage method may be temporary storage or permanent storage.

The peripheral interface 107 may include at least one wired or wireless network interface, at least one serial - parallel conversion interface, at least one input - output interface, and at least one USB interface, etc., to couple various external input / output devices to the memory 101 and the processor 105 to achieve communication with various external input / output devices.

The radio frequency module 109 is configured to transmit and receive electromagnetic waves, to realize the mutual conversion between electromagnetic waves and electrical signals, and to communicate with other devices through a communication network. The communication network includes cellular telephone networks, wireless local area networks, or metropolitan area networks. The above - mentioned communication networks may use various communication standards, protocols, and technologies.

The positioning module 111 is configured to obtain the current geographical location of the terminal 1100. Examples of the positioning module 111 include but are not limited to the Global Positioning System (GPS), positioning technologies based on wireless local area networks or mobile communication networks.

The camera module 113 belongs to the camera and is configured to take pictures or videos. The taken pictures or videos may be stored in the memory 101 and may also be sent to the host computer through the radio frequency module 109.

The audio module 115 provides an audio interface for users, which may include one or more microphone interfaces, one or more speaker interfaces, and one or more headphone interfaces. Audio data may be stored in the memory 101 and may also be sent through the radio frequency module 109.

The touch screen 117 provides an input - output interface between the terminal 1100 and the user. Specifically, users may perform input operations through the touch screen 117, such as clicking, touching, and sliding gestures, to make the terminal 1100 respond to these input operations. The terminal 1100 then displays output content in the form of text, pictures, or videos, or a combination thereof, to the user through the touch screen 117.

The button module 119 includes at least one button, which provides an interface for users to input to the terminal 1100. Users may press different buttons to make the terminal 1100 perform different functions. For example, the volume adjustment button allows users to adjust the volume of the sound played by the terminal 1100.

It should be understood that the structure shown in FIG. 12 is only for illustration. The terminal 1100 may include more or fewer components than those shown in FIG. 12, or it may have components different from those shown in FIG. 12. The components shown in FIG. 12 may be implemented using hardware, software, or a combination thereof.

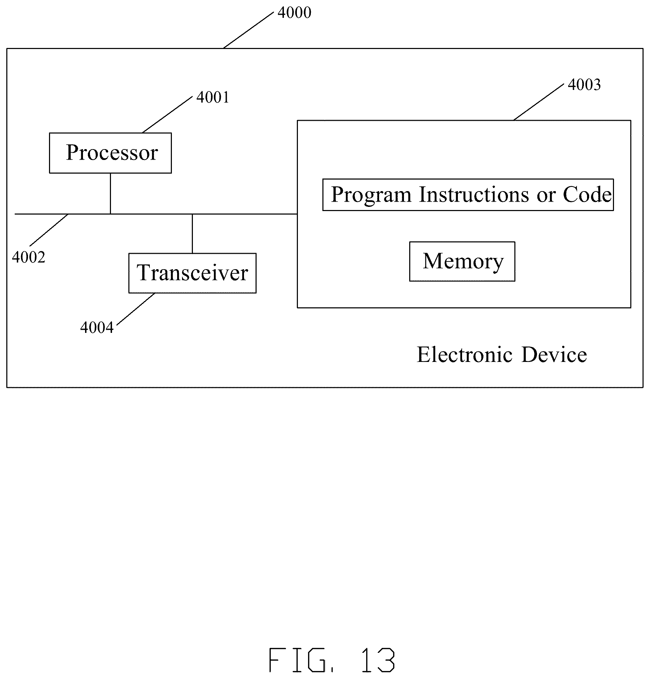

Please refer to FIG. 13. The embodiments of the present application provide an electronic device 4000, which may include smartphones, tablet computers, smart devices, etc. As shown in FIG. 13, the electronic device 4000 includes at least one processor 4001 and at least one memory 4003.

The data interaction between the processor 4001 and the memory 4003 may be realized through at least one communication bus 4002. The communication bus 4002 may include a path for transmitting data between the processor 4001 and the memory 4003. The communication bus 4002 may be a PCI (Peripheral Component Interconnect) bus or an EISA (Extended Industry Standard Architecture) bus, etc. The communication bus 4002 may be divided into address bus, data bus, control bus, etc. For the sake of simplicity, FIG. 13 only shows one thick line, however it does not mean that there is only one bus or only one type of bus.

Optionally, the electronic device 4000 may also include a transceiver 4004. The transceiver 4004 may be used for data interaction between the electronic device and other electronic devices, such as data transmission and / or data reception. It should be noted that in practical applications, the transceiver 4004 is not limited to one, and the structure of the electronic device 4000 does not constitute a limitation on the embodiments of the present application.

The processor 4001 may be a CPU (Central Processing Unit), a general - purpose processor, a DSP (Digital Signal Processor), an ASIC (Application - Specific Integrated Circuit), an FPGA (Field - Programmable Gate Array), or other programmable logic devices, transistor logic devices, hardware components, or any combination thereof. It may realize or execute various exemplary logic blocks, modules, and circuits described in combination with the content disclosed in the present application. The processor 4001 may also be a combination that realizes computing functions, such as a combination of one or more microprocessors, a combination of DSP and microprocessors, etc.

The memory 4003 may be ROM (Read - Only Memory) or other types of static storage devices that may store static information and instructions, RAM (Random Access Memory) or other types of dynamic storage devices that may store information and instructions, or EEPROM (Electrically Erasable Programmable Read - Only Memory), CD - ROM (Compact Disc Read - Only Memory), or other optical disk storage, optical disc storage (including compact discs, laser discs, optical discs, digital versatile discs, Blu - ray discs, etc.), magnetic disk storage media or other magnetic storage devices, or any other medium that may be used to carry or store desired program instructions or code in the form of instructions or data structures and may be accessed by the electronic device 4000, but not limited to this.

The memory 4003 stores program instructions or code, and the processor 4001 may read the program instructions or code stored in the memory 4003 through the communication bus 4002. When the program instructions or code are executed by the processor 4001, the device control method described in the above embodiments is realized.

In addition, the present application provides a computer-readable storage medium. The computer-readable storage medium stores program instructions or code. When the program instructions or code are loaded and executed by the processor, the device control method described above is realized.

The present application also provides an application program product. The application program product includes program instructions or code stored in a computer-readable storage medium. The processor of the electronic device reads the program instructions or code from the computer-readable storage medium, loads and executes the program instructions or code, so that the electronic device realizes the device control method described above.

Compared with the related technologies, the embodiments of the present application may configure up to 30 monitoring regions in the detection range of the sensing device. Each monitoring region may be configured with corresponding device control services, not limited to automated services, but also scene services. Not only is the monitoring of the region status of each monitoring region independent and non - interfering with each other, but also the relationship between each target and each monitoring region is independent, fully ensuring refined device control. The sensing device is configured to monitor the region status of each monitoring region, which may be reported to the server through the wide - area network, and may also be reported to the gateway within the local - area network. As long as the local - area network is not disconnected, device control may be realized through the local - area network, fully ensuring the success rate of device control. By setting a buffer area between the monitoring region and the non - monitoring region, it effectively prevents incorrect device control caused by noise in the sensing device when the target is at the boundary of the monitoring region, which further helps to improve the accuracy of device control. In addition, by introducing the pitch angle of the radar device installation through the accelerometer to correct the pitch angle measured by the radar device itself, the accuracy of the target position is effectively ensured.

The above - mentioned embodiments are only part of the implementation of the present application. It should be pointed out that for those of ordinary skill in the technical field, several improvements and refinements may be made without departing from the principles of the present application, and these improvements and refinements should also be regarded as the scope of protection of the present application.

**Claims**

1. A device control method, executed by an electronic device, comprising:

    displaying a region editing page; the region editing page shows the current position of the target, and the region editing page is used to configure at least one monitoring region within the detection range of the sensing device based on the current position of the target;
    if a region editing operation is detected in the region editing page for configuring the monitoring region, and generating a custom monitoring region;
    displaying an automation configuration page for the monitoring region;
    in response to an automation configuration operation for the monitoring region in the automation configuration page, generating automation configuration scheme corresponding to the monitoring region; the automation configuration scheme are used to achieve automatic control of the controlled device by monitoring the region status of the monitoring region.

2. The method of claim 1, wherein displaying the automation configuration page for the monitoring region comprises:

    displaying an associated page corresponding to the sensing device; the associated page displays an automation entry;
    in response to a trigger operation on the automation entry, transitioning from the associated page to the automation configuration page; the automation configuration page is used to configure at least one of a trigger condition and a controlled action related to the monitoring region.

3. The method of claim 1, wherein in response to an automation configuration operation for the monitoring region in the automation configuration page, generating automation configuration schemes corresponding to the monitoring region comprises:

    in the automation configuration page, if an automation configuration operation on the trigger condition configuration entry is detected, configuring a corresponding trigger condition for the monitoring region of the sensing device;
    generating the automation configuration schemes based on the completed trigger condition configuration, and displaying the automation configuration schemes on the automation configuration page.

4. The method of claim 1, wherein in response to an automation configuration operation for the monitoring region in the automation configuration page, generating automation configuration schemes corresponding to the monitoring region comprises:

    when an automation configuration operation on the controlled action entry is detected, configuring controlled data associated with the trigger condition; the controlled data is used to instruct the controlled device to perform the corresponding action;
    generating the automation configuration schemes based on the completed controlled data configuration, and displaying the automation configuration schemes on the automation configuration page.

5. The method of claim 1, wherein displaying the region editing page comprises:

    displaying the monitoring page corresponding to the sensing device; the monitoring page displays a region editing entry;
    in response to a trigger operation on the region editing entry, transitioning from the monitoring page to the region editing page.

6. The method of claim 4, wherein displaying the monitoring page corresponding to the sensing device comprises:

    displaying at least one device identifier in the device page; each device identifier is used to represent a bound sensing device;
    if a selection operation on each of the device identifiers is detected, transitioning from the device page to the monitoring page corresponding to the sensing device; the sensing device corresponds to the selected device identifier.

7. The method of claim 1, wherein the method further comprising:

    displaying the device editing page; the device editing page displays at least one entry for editing the monitoring attributes of the sensing device for the monitoring region;
    in response to an attribute editing operation on at least one entry, editing the monitoring attributes of the sensing device for the monitoring region, so that the sensing device monitors the region status of the monitoring region based on the edited monitoring attributes.

8. The method of claim 1, wherein after displaying the region editing page, the method further comprising:

    in the region editing page, if a trigger operation on the region addition entry is detected, controlling the region editing page to transition from the region display state to the region editing state;
    in the region editing page in the region editing state, in response to editing operations on each monitoring region, editing each monitoring region.

9. The method of claim 1, wherein after displaying the region editing page, the method further comprising:

    in the region editing page, if a trigger operation on the displayed monitoring region is detected, controlling the region editing page to transition from the region display state to the region editing state;
    in the region editing page in the region editing state, in response to editing operations on each monitoring region, editing each monitoring region.

10. A device control method, executed by an electronic device, comprising:

    acquiring the position of the target in each monitoring region, the monitoring region being generated based on an editing operation triggered in the region editing page; the region editing page is configured to configure at least one monitoring region within the detection range of the sensing device based on the current position of the target;
    determining the region status of each monitoring region based on the position of the target in each monitoring region;
    if the region status of the monitoring region satisfies a trigger condition in a corresponding automation configuration schemes, controlling the controlled device to perform a corresponding action based on the controlled data associated with the trigger condition in the automation configuration.

11. The method of claim 10, wherein determining the region status of each monitoring region based on the position of the target in each monitoring region comprises:

    for each monitoring region, determining the positional relationship between the target and the monitoring region at different times based on the position of the target in the monitoring region;
    determining the region status of the monitoring region based on the positional relationship between the target and the monitoring region at different times.

12. The method of claim 11, wherein determining the region status of the monitoring region based on the positional relationship between the target and the monitoring region at different times comprises:

    if the sensing device has directional monitoring capability, determining the direction in which the target enters the monitoring region based on the positional relationship between the target and the monitoring region at different times;
    determining the region status of the monitoring region based on the determined direction and positional relationship.

13. The method of claim 12 or 10, wherein determining the region status of the monitoring region based on the positional relationship between the target and the monitoring region at different times comprises:

    based on the positional relationship between the target and the monitoring region at different times, if the positional relationship indicates that the target is currently located in the buffer area, determining whether the target was approaching the non - monitoring region in the preceding time;
    the buffer area is located between the monitoring region and the non - monitoring region;
    if not, determining that the region status of the monitoring region is that the target is approaching the monitoring region.

14. A device control apparatus, comprising:

    an editing page display module, configured to display a region editing page; the region editing page shows the current position of the target, and the region editing page is used to configure at least one monitoring region within the detection range of the sensing device based on the current position of the target;

a monitoring region generation module, configured to generate a custom monitoring region if a region editing operation is detected in the region editing page for configuring the monitoring region;

a configuration page display module, configured to display an automation configuration page for the monitoring region;

a configuration scheme generation module, configured to generate automation configuration schemes corresponding to the monitoring region in response to an automation configuration operation for the monitoring region in the automation configuration page; the automation configuration schemes are used to achieve automatic control of the controlled device by monitoring the region status of the monitoring region.

15. The apparatus of claim 14, wherein the configuration page display module is further configured to display an associated page corresponding to the sensing device; the associated page displays an automation entry; in response to a trigger operation on the automation entry, transitioning from the associated page to the automation configuration page; the automation configuration page is used to configure at least one of a trigger condition and a controlled action related to the monitoring region.

16. A device control apparatus, comprising:

a position acquisition module, configured to acquire the position of the target in each monitoring region, the monitoring region being generated based on an editing operation triggered in the region editing page; the region editing page is configured to configure at least one monitoring region within the detection range of the sensing device based on the current position of the target;

a status monitoring module, configured to determine the region status of each monitoring region based on the position of the target in each monitoring region;

a device control module, configured to control the controlled device to perform a corresponding action based on the controlled data associated with the trigger condition in the automation configuration if the region status of the monitoring region satisfies the trigger condition in the corresponding automation configuration schemes.

17. The apparatus of claim 16, wherein the status monitoring module is further configured to determine the positional relationship between the target and the monitoring region at different times based on the position of the target in each monitoring region; and determine the region status of the monitoring region based on the positional relationship between the target and the monitoring region over time.

18. An electronic device, comprising at least one processor and at least one memory, wherein the memory stores computer-readable instructions; the computer-readable instructions, when executed by one or more of the processors, implement the device control method according to any one of claims 1 to 13.

19. A computer-readable storage medium, storing computer-readable instructions, the computer-readable instructions, when executed by one or more processors, implement the device control method according to any one of claims 1 to 13.

20. A computer program product, including computer-readable instructions, the computer-readable instructions, when executed by a processor, implement the steps of the method according to any one of claims 1 to 13.

Server end 170

Wide area
network path

190

Router 2G/3G/4G/5G/WIFI

WIFI WIFI

150

Gateway LAN Path

ZIGBEE/bluetooth ZIGBEE/bluetooth 110

Smart device Smart device

130 130 User terminal

FIG. 1

displaying a region editing page
— 310

if a region editing operation is detected in the region editing page for configuring the monitoring region, and generating a custom monitoring region
— 330

displaying an automation configuration page for the monitoring region
— 350

in response to an automation configuration operation for the monitoring region in the automation configuration page, generating automation configuration scheme corresponding to the monitoring region
— 370

FIG. 2

Edit Area

Long Press Area to Enter Edit Mode

301

303

302

Desk

304

Bed

Template                Sticker            Create New            TemplCreate New
                                          Monitoring region      Other Areaate

FIG. 3

XX : XX

《        Add Device

Q Search

401

Gateway Control

402

Switch and Socket

Human Sensor      Human Sensor

Sensing Monitoring

Window and Door
Sensing Monitoring     ——————     Sensor     ——————

Smart Door Lock

Window and Door     Window and Door
Camera Monitoring      Sensor      Sensor

403

Window and Door Shade

Window and Door     Window and Door
Wireless Remote Control    Sensor      Sensor

FIG. 4A

501

506

XX : XX

Sensor

504

503

502

Edit Area

505

15:22  Presence Detected

Status Detection

FIG. 4B

## More Settings

### Anti - Light Pollution Mode
After enabling, the indicator light will be completely turned off during the specified period

### Working Mode
Set the working mode of the sensor

Personnel Positioning >

### Presence Detection Sensitivity
High >

### Proximity Sensing Distance
Medium >

### Fall Detection Sensitivity
Low >

### Area Name Synchronization
Synchronize the area name in Aqara Home and the family area name >

## Proximity Sensor

**Long**
Trigger distance greater than 3 meters, suitable for large conference rooms and other scenarios

**Medium**
Trigger distance of about 2 meters, suitable for ordinary home environments and other scenarios ✓

**Short**
Trigger distance of about 1 meter, suitable for small - space scenarios

---

## Working Mode

Human presence detection is a fixed mode and is enabled by default

### Enable Human Presence Detection Only

### Personnel Positioning
Provide real - time location data of the user and proximity sensing function, only supporting side - mounted and side - inverted installation methods ✓

### Detection Direction
Set the detection direction mode of the sensor

Non - directional Monitoring >

### Reverse Coordinate Direction
Set the left - right coordinate direction of the device

Close >

### Fall Detection
Can be used to monitor the user's fall, only supporting ceiling - mounted devices

## Detection Direction

**Non - directional Monitoring**
Can monitor the status of all people within the sensing range ✓

**Left - Right Monitoring**
Can monitor the status of people on the left and right sides within the sensing range

FIG. 4C

FIG. 5A

701

702

703

705

704

706

707

Please Enter a Name

Area 1

Cancel    Confirm

Area 1

Save

Color

Type Other

Area 1

Save

Color

Type Other

FIG. 5B

**FIG. 6A**

XX : XX    ,ıll   ▭

〉   Please Enter a Name

△ Scene(0)    ⊕

△ Automation(0)    ⊕

---

XX : XX    ,ıll   ▭

〉   Create New Automation

When

Add

Then

Add

Execute Once
Automation will automatically turn off
after executing once

EP 4 685 584 A1

| ‹ Create New Automation | ‹ Human Presence Sensor FR2-2 | ‹ Area Detection 803 |
|---|---|---|
| | Someone has fallen and remained for a certain duration | |
| When    Meet All Conditions ▽ | Light intensity rises to | Desk ❯ |
| ⭕ Area Detection: Desk is Occupied (Time Period)<br>Human Presence Sensor FR2-2 | Light intensity drops to | TV Area ❯ |
| 801 | | Sofa Area ❯ |
| ⌐Add¬ | Above the specified light intensity | |
| | | Dining Area ❯ |
| | Below the specified light intensity | |
| Then | 802 | |
| | ⌐Area Detection¬ | |
| ✉ Send Notification (Time Period) | | |
| | Area is occupied for more than a certain duration | |
| Add | | |
| | Area is unoccupied for more than a certain duration | |
| Execute Once | | |
| Automation will automatically turn off after executing once ⬭ | Occupied for more than a certain duration | |

FIG. 6B

**Area Detection** screen

XX : XX

‹ Area Detection

TV Area ›

Coffee Table ›

Sofa Area ›

Dining Area ›

803

**Select Trigger Condition** screen

XX : XX

‹ Select Trigger Condition OK

Occupied

Approaching

Entered

Vacant

Left

Moving Away

804

805

**Create New Automation** screen

XX : XX

‹ Create New Automation Save

When — Meet All Conditions ▽

○ Area Detection: Sofa Area Entered
Human Presence Sensor FR2-2 — (Time Period)

Add

Then

○ Open
Living room sofa area lighting — (Time Period)

Add

Execute Once
Automation will automatically turn off after executing once ⊂◯

FIG. 6C

acquiring the position of the target in each monitoring region, the monitoring region is generated based on an editing operation triggered in the region editing page

~710

determining the region status of each monitoring region based on the position of the target in each monitoring region

~730

if the region status of the monitoring region satisfies a trigger condition in a corresponding automation configuration scheme, controlling the controlled device to perform a corresponding action based on the controlled data associated with the trigger condition in the automation configuration

~750

FIG. 7

Monitoring Range

Monitoring Region

Buffer Region

Non-Monitoring Region

FIG. 8

Input the positions
of N targets

Start iterating from the first
target with i = 0

i<N → no → end

yes

The target is within the
buffer aregion

no

Is the target approaching the
non-monitoring region? → yes → Moving away from the monitoring region / moving away from the sensing device

no

Is the target approaching the
non-monitoring region? → no

yes

Was the target previously
approaching the
non-monitoring region? → no → Approaching the monitoring region / approaching the sensing device

yes

i=i+1

FIG. 9A

EP 4 685 584 A1

```
                          ╭─────────────────────────╮
                          │ Input the positions of N targets │
                          ╰─────────────────────────╯
                                        │
                                        ▼
                    no      ╱ N > 0 and no target was in the ╲     yes
          ┌─────────────────   monitoring region last time   ─────────────────┐
          │                    ╲                            ╱                   │
          ▼                                                                     ▼
  ╱ N = 0 and a target was in the ╲                      ╱ Determine whether there is ╲   no   ┌──────────────┐
  ╲  monitoring region last time  ╱                      ╲    directional detection    ╱───────│ Entering the │
          │ yes                                                   │ yes                        │  monitoring  │
          ▼                                                       ▼                            │    region    │
┌──────────┐  no  ╱ Determine whether there is ╲      ╱ Determine the entry ╲   left   ┌──────────────┐
│ Leaving  │──────╲    directional detection    ╱     ╲      direction       ╱─────────│ Entering the │
│   the    │              │ yes                              │ right                   │  monitoring  │
│monitoring│              ▼                                  ▼                         │ region from  │
│  region  │      ╱ Determine the entry ╲    left   ┌──────────────────┐               │   the left   │
└──────────┘──────╲      direction       ╱──────┐   │ Entering the     │               └──────────────┘
┌──────────┐              │ right         │      │   │ monitoring region│
│ Leaving  │              ▼               │      │   │ from the right   │
│   the    │      ┌──────────────┐        │      │   └──────────────────┘
│monitoring│      │ Leaving the  │        │
│region from│     │monitoring region │
│ the left │      │ from the right │
└──────────┘      └──────────────┘
```

**Input the positions of N targets**

**N > 0 and no target was in the monitoring region last time**
- no
- yes

**N = 0 and a target was in the monitoring region last time** — yes

**Determine whether there is directional detection** (left branch) — yes

**Determine the entry direction** (left branch)
- no → Leaving the monitoring region
- left → Leaving the monitoring region from the left
- right → Leaving the monitoring region from the right

**Determine whether there is directional detection** (right branch)
- no → Entering the monitoring region
- yes → Determine the entry direction
  - left → Entering the monitoring region from the left
  - right → Entering the monitoring region from the right

FIG. 9B

FIG. 9C

| | | | 900 |
|---|---|---|---|
| **Device Control Apparatus** | | | |
| 910 | 930 | 950 | 970 |
| Editing Page Display Module | Monitoring Region Generation Module | Configuration Page Display Module | Configuration Scheme Generation Module |

FIG. 10

1010

## Device Control Apparatus

| Position Acquisition Module | Status Monitoring Module | Device Control Module |
|---|---|---|

1010     1030     1050

FIG. 11

FIG. 12

4000

4003

4001

Processor

Program Instructions or Code

4002

Memory

Transceiver

4004

Electronic Device

FIG. 13

## INTERNATIONAL SEARCH REPORT

International application No.

**PCT/CN2024/082807**

| A. | CLASSIFICATION OF SUBJECT MATTER |
| --- | --- |

G05B15/02(2006.01)i; G06F3/0483(2013.01)i

According to International Patent Classification (IPC) or to both national classification and IPC

| B. | FIELDS SEARCHED |
| --- | --- |

Minimum documentation searched (classification system followed by classification symbols)

IPC:G05B; G06F

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI: 智能, 家具, 家居, 家电, 设备, 电器, 监测, 监控, 感应, 区域, 范围, 空间, 编辑, 设置, 交互, 图形, 页面, 界面, 窗口, 自定义, 自动化, 触发, 条件, 参数, Intelligent, smart, furniture, appliance, monitor, sense, area, range, region, edit, set, interact, page, interface, window, automation, trigger, condition, parameter

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | CN 115061380 A (SHENZHEN LUMI UNITED TECHNOLOGY CO., LTD.) 16 September 2022 (2022-09-16) description, paragraphs 0042-0174, and figures 1-15 | 1, 10-11, 14, 16-20 |
| PX | CN 116300499 A (SHENZHEN LUMI UNITED TECHNOLOGY CO., LTD.) 23 June 2023 (2023-06-23) description, paragraphs 0051-0218, and figures 1-16 | 1-20 |
| A | CN 108965067 A (MIDEA SMART HOME TECHNOLOGY CO., LTD. et al.) 07 December 2018 (2018-12-07) entire document | 1-20 |
| A | CN 110109364 A (SHENZHEN LUMI UNITED TECHNOLOGY CO., LTD.) 09 August 2019 (2019-08-09) entire document | 1-20 |
| A | CN 114064398 A (SHENZHEN LUMI UNITED TECHNOLOGY CO., LTD.) 18 February 2022 (2022-02-18) entire document | 1-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 June 2024** | **25 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/082807** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 115150421 A (SHENZHEN LUMI UNITED TECHNOLOGY CO., LTD.) 04 October 2022 (2022-10-04)<br>      entire document | 1-20 |
| A | CN 115174872 A (YUNDING NETWORK TECHNOLOGY (BEIJING) CO., LTD.) 11 October 2022 (2022-10-11)<br>      entire document | 1-20 |
| A | CN 115390468 A (SHENZHEN LUMI UNITED TECHNOLOGY CO., LTD.) 25 November 2022 (2022-11-25)<br>      entire document | 1-20 |
| A | KR 20210105151 A (YEUNGJIN COLLEGE INDUSTRY-ACADEMY COOPERATION) 26 August 2021 (2021-08-26)<br>      entire document | 1-20 |
| A | US 2016027278 A1 (EMPOWERYU INC.) 28 January 2016 (2016-01-28)<br>      entire document | 1-20 |

Form PCT/ISA/210 (second sheet) (July 2022)

## INTERNATIONAL SEARCH REPORT
### Information on patent family members

| International application No. |
| PCT/CN2024/082807 |

| Patent document cited in search report | | | Publication date (day/month/year) | Patent family member(s) | | | Publication date (day/month/year) |
|---|---|---|---|---|---|---|---|
| CN | 115061380 | A | 16 September 2022 | WO | 2023236848 | A1 | 14 December 2023 |
| CN | 116300499 | A | 23 June 2023 | | None | | |
| CN | 108965067 | A | 07 December 2018 | | None | | |
| CN | 110109364 | A | 09 August 2019 | | None | | |
| CN | 114064398 | A | 18 February 2022 | | None | | |
| CN | 115150421 | A | 04 October 2022 | | None | | |
| CN | 115174872 | A | 11 October 2022 | | None | | |
| CN | 115390468 | A | 25 November 2022 | | None | | |
| KR | 20210105151 | A | 26 August 2021 | | None | | |
| US | 2016027278 | A1 | 28 January 2016 | US | 10311694 | B2 | 04 June 2019 |

Form PCT/ISA/210 (patent family annex) (July 2022)

**REFERENCES CITED IN THE DESCRIPTION**

**Patent documents cited in the description**

- CN 2023102706742